# EUROPÄISCHE PATENTSCHRIFT

(11) **EP 1 931 479 B1**
(45) Veröffentlichungstag und Bekanntmachung des Hinweises auf die Patenterteilung: **27.02.2013**
(21) Anmeldenummer: 06806004.5
(22) Anmeldetag: 03.10.2006
(51) Int. Cl.: B05B 15/12, B01D 46/42

(54) **ANLAGE ZUM LACKIEREN VON GEGENSTÄNDEN UND VERFAHREN ZUM ABTRENNEN VON NASSLACK-OVERSPRAY**
DEVICE AND METHOD FOR REMOVING WET-PAINT OVERSPRAY
DISPOSITIF ET PROCEDE DESTINES A SEPARER LA PEINTURE HUMIDE PERDUE LORS DE LA PULVERISATION

(30) Priorität: 05.10.2005 DE 102005048579
(43) Veröffentlichungstag der Anmeldung: 18.06.2008
(73) Patentinhaber: Dürr Systems GmbH, 74321 Bietigheim-Bissingen (DE)
(72) Erfinder: WIELAND, Dietmar, 71336 Waiblingen (DE); HOLZHEIMER, Jens, 71732 Tamm (DE)
(74) Vertreter: Hörner, Andreas
(86) Internationale Anmeldenummer: PCT/EP2006/009562
(87) Internationale Veröffentlichungsnummer: WO 2007/039275

(56) Entgegenhaltungen:
- EP-A- 1 704 925
- EP-A- 1 704 926
- EP-A2- 1 704 925
- EP-A2- 1 704 926
- WO-A-2006/099999
- WO-A-2006/100001
- WO-A1-2006/099999
- WO-A1-2006/100001
- DE-A1- 4 211 465
- DE-A1- 10 209 499
- DE-A1- 19 715 244
- DE-T0- 19 581 776
- US-A- 4 010 013
- US-A- 5 153 028
- US-A- 5 153 034
- US-B1- 6 451 091

## Beschreibung

Die vorliegende Erfindung betrifft eine Anlage zum Lackieren von Gegenständen, insbesondere von Fahrzeugkarosserien, umfassend mindestens eine Lackierkabine und mindestens eine Vorrichtung zum Abtrennen von Nasslack-Overspray aus einem Overspray-Partikel enthaltenden Abluftstrom, wobei die Overspray-Partikel in einem Applikationsbereich der Lackieranlage in den Abluftstrom gelangen und wobei die Vorrichtung mindestens eine Abtrennvorrichtung zum Abtrennen des Oversprays aus zumindest einem Teil des Abluftstroms umfasst.

Eine solche Lackieranlage ist beispielsweise aus der DE 42 11 465 C2 bekannt und wird insbesondere zum Spritzlackieren von Fahrzeugkarosserien eingesetzt. Dabei wird ein Luftstrom durch einen Applikationsbereich der Anlage erzeugt, welcher überschüssigen Nasslack aus dem Applikationsbereich abführt.

Die Abtrennvorrichtung kann dabei insbesondere ein regenerierbares Oberflächenfilter umfassen, das heißt ein Filter, das eine Filteroberfläche aufweist, an welcher der vom Abluftstrom mitgeführte Nasslack-Overspray abgeschieden wird, und das, vorzugsweise im laufenden Betrieb der Vorrichtung, von dem darauf abgeschiedenen Lack-Overspray abreinigbar ist.

Um das Abreinigen des regenerierbaren Oberflächenfilters zu erleichtern, kann das regenerierbare Oberflächenfilter eine ein Precoat-Material umfassende Sperrschicht aufweisen, welche ein Verkleben der Filteroberfläche verhindert. Diese Sperrschicht wird nach dem Abreinigen des Oberflächenfilters durch einen Precoatiervorgang erneuert und kann zwischen den Abreinigungsvorgängen durch Zwischenprecoatiervorgänge verstärkt werden.

Die US 6 451 091 B1, die US 4 010 013 A und die DE 197 15 244 A1 offenbaren Vorrichtungen zum Entfernen von Verunreinigungen aus einem Abgasstrom, welche jeweils mehrere Filterkammern mit einem Filtermedium umfassen, die abwechselnd von dem zu reinigenden Abgasstrom durchströmt werden, wobei ein Sorptionsmittel direkt in eine Filterkammer eingespeist wird, während der Strömungsweg des zu reinigenden Abgasstroms durch die betreffende Filterkammer unterbrochen ist.

Der vorliegenden Erfindung liegt die Aufgabe zugrunde, eine Anlage der eingangs genannten Art zu schaffen, bei welcher ein Verkleben der Abtrennvorrichtung mit Nasslack-Overspray während eines Abreinigungsvorgangs und/oder ein Eindringen von Precoat-Material aus dem Bereich der Abtrennvorrichtung in den Applikationsbereich während eines Precoatierungsvorgangs weitgehend vermieden wird.

Diese Aufgabe wird bei einer Anlage mit den Merkmalen des Oberbegriffs von Anspruch 1 erfindungsgemäß dadurch gelöst, dass die Vorrichtung mindestens eine Verschließvorrichtung, mittels welcher der Strömungsweg des Abluftstroms von dem Applikationsbereich zu der Abtrennvorrichtung zeitweise zumindest teilweise verschließbar ist, und mindestens eine Precoat-Zuführeinrichtung umfasst, welche ein Precoat-Material stromabwärts von der Verschließvorrichtung in den Abluftstrom abgibt.

Der erfindungsgemäßen Lösung liegt das Konzept zugrunde, durch ein zumindest teilweises Verschließen des Strömungswegs des Abluftstroms zwischen dem Applikationsbereich und der Abtrennvorrichtung während der Abreinigungsvorgänge und/oder während der Precoatierungsvorgänge die Menge des während dieser Vorgänge vom Applikationsbereich zu der Abtrennvorrichtung transportierten Nasslack-Oversprays sowie die Menge des während dieser Vorgänge vom Bereich der Abtrennvorrichtung zum Applikationsbereich gelangenden Precoat-Materials zumindest zu verringern.

Ferner kann die Verschließvorrichtung auch in einem Störfall betätigt werden, um eine Verunreinigung der zu lackierenden Gegenstände in dem Applikationsbereich zu verhindern.

Da der Strömungsweg des Abluftstroms von dem Applikationsbereich zu der Abtrennvorrichtung während der Abreinigungsvorgänge und/oder Precoatierungsvorgänge zumindest teilweise verschlossen wird, kann dieser Strömungsweg so gestaltet sein, dass er außerhalb der Schließphasen einen vergleichsweise großen durchströmbaren Querschnitt aufweist; insbesondere kann darauf verzichtet werden, besonders enge Engstellen mit hoher Strömungsgeschwindigkeit (größer als ungefähr 2 m/s) im Strömungsweg des Abluftstroms von dem Applikationsbereich zu der Abtrennvorrichtung vorzusehen.

Bei einer bevorzugten Ausgestaltung der Erfindung umfasst die Verschließvorrichtung mindestens ein Verschließelement und eine Bewegungseinrichtung, mittels welcher das Verschließelement in den Strömungsweg des Abluftstroms hinein in eine Schließstellung und aus dem Strömungsweg des Abluftstroms heraus in eine Offenstellung bewegbar ist.

Das Verschließelement kann beispielsweise im wesentlichen luftundurchlässig ausgebildet sein.

In diesem Fall ist vorzugsweise vorgesehen, dass der Strömungsweg des Abluftstroms von dem Applikationsbereich zu der Abtrennvorrichtung während der Abreinigungs- und/oder Precoatierungsvorgänge nur teilweise verschlossen wird, so dass stets zumindest ein Spalt verbleibt, durch welchen ein (in der Schließphase verminderter) Abluftstrom von dem Applikationsbereich zu der Abtrennvorrichtung gelangen kann. Gleichwohl wird bei dieser Ausgestaltung die aus dem Applikationsbereich zu der Abtrennvorrichtung transportierte Overspray-Menge bzw. die aus dem Bereich der Abtrennvorrichtung zu dem Applikationsbereich transportierte Menge an Precoat-Material durch die Verringerung des die Verschlussstelle passierenden Abluftstroms deutlich reduziert.

Das Verschließelement kann insbesondere eine Blechplatte umfassen.

Die Verschließeinrichtung ist in diesem Fall vorzugsweise so ausgebildet, dass das Verschließelement in eine Schließstellung bringbar ist, in der es höchstens ungefähr 80 % des von dem Abluftstrom bei in der Offenstellung befindlichem Verschließelement durchströmten Querschnitts überdeckt.

Ferner kann vorgesehen sein, dass das Verschließelement in einem Störfall in eine weitere Schließstellung bringbar ist, in welcher der Strömungsweg des Abluftstroms von dem Applikationsbereich zu der Abtrennvorrichtung durch das Verschließelement vollständig verschlossen wird.

Alternativ zu einem luftundurchlässigen Verschließelement kann auch vorgesehen sein, dass das Verschließelement luftdurchlässig ausgebildet ist und ein luftdurchlässiges Filterelement umfasst.

Das Filterelement filtert Nasslack-Overspray und Precoat-Material aus dem das Filterelement bei in der Schließstellung befindlichem Verschließelement durchsetzenden Luftstrom heraus, so dass weder Nasslack-Overspray noch Precoat-Material das Verschließelement passieren kann, wenn sich dasselbe in der Schließstellung befindet.

Bei Verwendung eines luftdurchlässigen Verschließelements wird der Strömungsweg des Abluftstroms von dem Applikationsbereich zu der Abtrennvorrichtung durch das Verschließelement in der Schließstellung vorzugsweise vollständig verschlossen.

Bei einer bevorzugten Ausgestaltung der Erfindung ist vorgesehen, dass das Verschließelement eine Tragstruktur umfasst, an welcher das Filterelement gehalten ist.

Insbesondere kann vorgesehen sein, dass das Filterelement mittels einer Klemmeinrichtung einer Tragstruktur gehalten ist. Auf diese Weise kann ein mit Nasslack-Overspray und/oder Precoat-Material beladenes Filterelement in einfacher Weise von der Tragstruktur gelöst und gegen ein frisches Filterelement ausgetauscht werden.

Um den Durchtritt von Luft durch das Verschließelement zu ermöglichen, kann vorgesehen sein, dass die Tragstruktur wabenförmig angeordnete Luftdurchtrittsöffnungen aufweist.

Ein besonders stabiles Verschließelement wird erhalten, wenn die Tragstruktur aus einem metallischen Material gebildet ist.

Die Bewegungseinrichtung zum Bewegen des Verschließelements von der Offenstellung in die Schließstellung und zurück in die Offenstellung umfasst vorzugsweise mindestens eine Führungsschiene zum Führen des Verschließelements.

Ferner kann die Bewegungseinrichtung beispielsweise einen elektrischen, hydraulischen oder pneumatischen Antrieb für das Verschließelement umfassen.

Bei einer besonderen Ausgestaltung der Bewegungseinrichtung ist vorgesehen, dass die Bewegungseinrichtung ein umlaufendes Förderelement, insbesondere eine Kette oder einen Zahnriemen, umfasst.

Besonders günstig ist es, wenn das in der Verschließstellung befindliche Verschließelement so ausgebildet ist, dass es durch eine Bedienperson begehbar ist. In diesem Fall kann das begehbare Verschließelement insbesondere als Ausgangspunkt für die Durchführung von Wartungs- und/oder Reparaturarbeiten an einer Fördervorrichtung, welche die zu lackierenden Gegenstände durch den Applikationsbereich fördert, dienen. Die üblicherweise die Lackierkabine nach unten begrenzenden begehbaren Gitterroste können in diesem Fall entfallen.

Wenn die zu lackierenden Gegenstände mittels einer Fördervorrichtung durch den Applikationsbereich gefördert werden, ist vorzugsweise vorgesehen, dass der vertikale Abstand zwischen der Oberseite des in der Verschließstellung befindlichen Verschließelements und der Unterseite der zu lackierenden Gegenstände höchstens ungefähr 2 m beträgt, damit die Fördervorrichtung für eine auf dem Verschließelement stehende Bedienperson gut zugänglich ist.

Um das Verschließelement in seiner Schließstellung besonders stabil zu halten, ist vorzugsweise vorgesehen, dass die Vorrichtung ein Stützelement umfasst, an welchem sich das Verschließelement in der Schließstellung abstützt.

Ein solches Stützelement kann insbesondere als eine vertikale Trennwand in einer Strömungskammer der Vorrichtung ausgebildet sein, an deren oberem Rand sich das Verschließelement abstützt.

Um das Verschließelement außerhalb der Schließphasen vor einer Verschmutzung durch Nasslack-Overspray oder durch Precoat-Material zu schützen, ist es günstig, wenn das Verschließelement in der Offenstellung unterhalb eines Strömungsleitelements der Vorrichtung angeordnet ist.

Die erfindungsgemäße Vorrichtung umfasst vorzugsweise mindestens ein regenerierbares Oberflächenfilter.

Um das regenerierbare Oberflächenfilter und/oder Begrenzungswände des Strömungsweges des Abluftstroms mit einer Sperrschicht zu versehen, welche ein Anhaften von Nasslack-Overspray verhindert, umfasst die Vorrichtung mindestens eine Precoat-Zuführeinrichtung, welche ein Precoat-Material stromabwärts von der Verschließvorrichtung in den Abluftstrom abgibt.

Die Abgabe des Precoat-Materials in den Abluftstrom erfolgt vorzugsweise dann, wenn die Verschließvorrichtung den Strömungsweg des Abluftstroms zumindest teilweise verschließt, so dass die Verschließvorrichtung das Precoat-Material daran hindert, in den Applikationsbereich der Lackieranlage zu gelangen.

Bei einer besonderen Ausgestaltung der erfindungsgemäßen Anlage ist vorgesehen, dass der Strömungsweg des Abluftstroms von der Verschließvorrichtung zu der Abtrennvorrichtung mindestens einen verengten Bereich aufweist. Durch die erhöhte Strömungsgeschwindigkeit des Abluftstroms in dem verengten Bereich wird erreicht, dass praktisch kein Precoat-Material aus dem stromabwärts von dem verengten Bereich gelegenen Abschnitt des Strömungswegs des Abluftstroms entgegen der Strömungsrichtung des Abluftstroms zu der Verschließvorrichtung gelangen kann. Abreinigungs- und Precoatierungsvorgänge in dem stromabwärts von dem verengten Bereich gelegenen Abschnitt des Strömungsweges können daher durchgeführt werden, ohne dass der Strömungsweg des Abluftstroms von dem Applikationsbereich zu der Abtrennvorrichtung während dieser Vorgänge zumindest teilweise verschlossen wird. Vielmehr genügt es in diesem Fall, wenn der Strömungsweg des Abluftstroms von dem Applikationsbereich zu der Abtrennvorrichtung mittels der Verschließvorrichtung zumindest teilweise verschlossen wird, wenn Precoatierungsvorgänge in dem zwischen der Verschließvorrichtung und dem verengten Bereich gelegenen Abschnitt des Strömungsweges des Abluftstroms durchgeführt werden.

Die mittlere Strömungsrichtung des Abluftstroms beim Passieren des verengten Bereichs ist vorzugsweise im wesentlichen horizontal ausgerichtet.

Vorzugsweise umfasst die Vorrichtung mindestens eine Precoat-Zuführeinrichtung, welche ein Precoat-Material stromabwärts von dem verengten Bereich in den Abluftstrom abgibt. Wie bereits ausgeführt, muss die Verschließvorrichtung nicht in die Schließstellung gebracht werden, während eine solche Precoat-Zuführeinrichtung betrieben wird.

Bei einer bevorzugten Ausgestaltung der Vorrichtung ist vorgesehen, dass die Vorrichtung mindestens einen Aufnahmebehälter für gebrauchtes Precoat-Material umfasst. Durch die Sammlung von gebrauchtem Precoat-Material in einem solchen Aufnahmebehälter kann das gebrauchte, das heißt mit Nasslack-Overspray versetzte, Precoat-Material einer erneuten Verwendung zum Precoatieren eines Filterelements oder einer Begrenzungswand des Strömungsweges des Abluftstroms zugeführt werden.

Ein solcher Aufnahmebehälter ist vorzugsweise unterhalb der Abtrennvorrichtung und/oder unterhalb der Verschließvorrichtung angeordnet.

Der Aufnahmebehälter kann insbesondere über eine Precoat-Abführleitung mit einem Precoat-Vorlagebehälter verbunden sein, um gebrauchtes Precoat-Material aus dem Aufnahmebehälter in einen solchen Precoat-Vorlagebehälter überführen zu können.

Mindestens ein Precoat-Vorlagebehälter kann mit mindestens einer Precoat-Zuführeinrichtung verbunden sein, welche ein Precoat-Material in den Abluftstrom abgibt.

Dieser Precoat-Vorlagebehälter kann wahlweise nasslackfreies oder nasslackbeladenes Precoat-Material an die Precoat-Zuführeinrichtung abgeben.

Das in dem Aufnahmebehälter gesammelte, gebrauchte Precoat-Material kann besonders einfach einer Wiederverwendung zugeführt werden, wenn die Vorrichtung mindestens eine Druckluftdüse umfasst, mittels welcher in dem Aufnahmebehälter befindliches Precoat-Material aufgewirbelt und aus dem Aufnahmebehälter in den Strömungsweg des Abluftstroms befördert werden kann.

Um permanent dem mit Nasslack-Overspray beladenen Abluftstrom ausgesetzte Flächen vor einem Anhaften von Nasslack-Overspray zu schützen, ist es günstig, wenn die Vorrichtung mindestens eine Luftschleiererzeugungsvorrichtung zum Erzeugen eines Luftschleiers an einer den Strömungsweg des Abluftstroms begrenzenden Wandfläche umfasst. Durch den erzeugten Luftschleier wird dabei verhindert, dass der mit Nasslack-Overspray beladene Abluftstrom an die durch den Luftschleier geschützte Wandfläche gelangt und Nasslack-Overspray aus dem Abluftstrom an dieser Wandfläche anhaftet.

Die dem Abluftstrom über eine oder mehrere Luftschleiererzeugungsvorrichtungen insgesamt zugegebene Luftmenge entspricht vorzugsweise von ungefähr 10 % bis ungefähr 30 % der aus dem Applikationsbereich stammenden Abluftmenge.

Besonders günstig ist es, wenn die der Luftschleiererzeugungsvorrichtung zugeführte Luft gekühlt ist, da die gekühlte Luft eine höhere Dichte aufweist als die aus dem Applikationsbereich stammende Abluft und dadurch nach unten hin, zu der zu schützenden Wandfläche, absinkt.

Über die Luftschleiererzeugungsvorrichtung kann beispielsweise Frischluft zugeführt werden.

Alternativ hierzu kann auch vorgesehen sein, dass über die Luftschleiererzeugungsvorrichtung gereinigte Abluft zugeführt wird.

Bei einer bevorzugten Ausgestaltung der Erfindung ist vorgesehen, dass die durch den Luftschleier geschützte Wandfläche im wesentlichen horizontal ausgerichtet ist.

Die durch den Luftschleier geschützte Wandfläche kann insbesondere eine Strömungsleitfläche sein, welche eine Engstelle im Strömungsweg des Abluftstroms von dem Applikationsbereich zu der Abtrennvorrichtung seitlich begrenzt.

In diesem Fall ist vorzugsweise vorgesehen, dass die mittlere Strömungsrichtung des Luftschleiers zu der Engstelle hin gerichtet ist, damit die Overspray-Partikel durch den Luftschleier zu der Engstelle hin gelenkt werden und anschließend durch die Engstelle zu der Abtrennvorrichtung gelangen.

Insbesondere kann vorgesehen sein, dass die von der Strömungsleitfläche begrenzte Engstelle mittels der Verschließvorrichtung zumindest teilweise verschließbar ist.

Ein besonders energiesparender Betrieb der Lackieranlage wird ermöglicht, wenn die Vorrichtung einen Umluftkreislauf aufweist, in welchem der Abluftstrom, aus dem der Nasslack-Overspray abgetrennt worden ist, zumindest teilweise erneut dem Applikationsbereich zugeführt wird.

Der vorliegenden Erfindung liegt die weitere Aufgabe zugrunde, ein Verfahren zum Abtrennen von Nasslack-Overspray aus einem Overspray-Partikel enthaltenden Abluftstrom, wobei die Overspray-Partikel in einem Applikationsbereich einer Lackieranlage in den Abluftstrom gelangen, zu schaffen, bei welchem ein Verkleben einer Abtrennvorrichtung für Nasslack-Overspray mit Nasslack-Overspray während eines Abreinigungsvorgangs und/oder ein Eindringen von Precoat-Material aus dem Bereich der Abtrennvorrichtung in den Applikationsbereich während eines Precoatierungsvorgangs weitgehend vermieden wird.

Diese Aufgabe wird durch ein Verfahren gelöst, welches folgende Verfahrensschritte umfasst:
- Abtrennen des Oversprays aus zumindest einem Teil des Abluftstroms mittels einer Abtrennvorrichtung;
- zeitweises, zumindest teilweises Verschließen des Strömungswegs des Abluftstroms von dem Applikationsbereich zu der Abtrennvorrichtung mittels mindestens einer Verschließvorrichtung ; und
- Abgeben eines Precoat-Materials in den Abluftstrom stromabwärts von der Verschließvorrichtung.

Wenn die Abtrennvorrichtung mindestens ein regenerierbares Oberflächenfilter umfasst, wird der Strömungsweg des Abluftstroms von dem Applikationsbereich zu der Abtrennvorrichtung vorzugsweise dann zumindest teilweise verschlossen, wenn das regenerierbare Oberflächenfilter abgereinigt wird.

Wenn ein Precoat-Material intervallweise stromabwärts von der Verschließvorrichtung in den Abluftstrom abgegeben wird, so wird der Strömungsweg des Abluftstroms von dem Applikationsbereich zu der Abtrennvorrichtung vorzugsweise während der Abgabe des Precoat-Materials an den Abluftstrom zumindest teilweise verschlossen.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen vertikalen Querschnitt durch eine erste Ausführungsform einer Lackierkabine mit einer darunter angeordneten Vorrichtung zum Abtrennen von Nasslack-Overspray aus einem Overspray-Partikel enthaltenden Abluftstrom, welche zwei Abtrennvorrichtungen zum Abtrennen des Oversprays aus dem Abluftstrom, zwei oberhalb der Abtrennvorrichtungen angeordnete Verschließvorrichtungen zum zeitweisen Verschließen des Strömungswegs des Abluftstroms und zwei Luftschleiererzeugungsvorrichtungen zur Erzeugung von Querluftschleiern an horizontalen Strömungsleitflächen umfasst;
- Fig. 2: eine schematische Seitenansicht der Anlage aus Fig. 1;
- Fig. 3: eine schematische Draufsicht von oben auf die Anlage aus den Fig. 1 und 2;
- Fig. 4: eine schematische perspektivische Darstellung der Anlage aus den Fig. 1 bis 3;
- Fig. 5: eine schematische Draufsicht von oben auf eine Tragstruktur eines Verschließelements einer Verschließvorrichtung der Anlage aus den Fig. 1 bis 3;
- Fig. 6: einen schematischen vertikalen Querschnitt durch ein Verschließelement einer Verschließvorrichtung der Anlage aus den Fig. 1 bis 4;
- Fig. 7: eine schematische Seitenansicht einer Verschließvorrichtung der Anlage aus den Fig. 1 bis 4;
- Fig. 8: einen schematischen vertikalen Schnitt durch einen Precoat-Vorlagebehälter;
- Fig. 9: einen schematischen Schnitt durch einen Injektor für Precoat-Material;
- Fig. 10: eine schematische Darstellung eines Umluftkreislaufs der Anlage aus den Fig. 1 bis 4, wobei den Luftschleiererzeugungsvorrichtungen Frischluft zugeführt wird und Abluft über eine Abluftklappe aus dem Umluftkreislauf abgegeben wird;
- Fig. 11: eine schematische Darstellung eines alternativen Umluftkreislaufs, bei welchem Abluft aus dem Umluftkreislauf über ein Abluftgebläse abgegeben wird;
- Fig. 12: eine schematische Darstellung eines Umluftkreislaufs, bei welchem den Luftschleiererzeugungsvorrichtungen gekühlte Abluft zugeführt wird und ferner Abluft aus dem Umluftkreislauf über eine Abluftklappe abgegeben wird;
- Fig. 13: eine schematische Darstellung eines alternativen Umluftkreislaufs, bei welchem Abluft aus dem Umluftkreislauf über ein Abluftgebläse abgegeben wird;

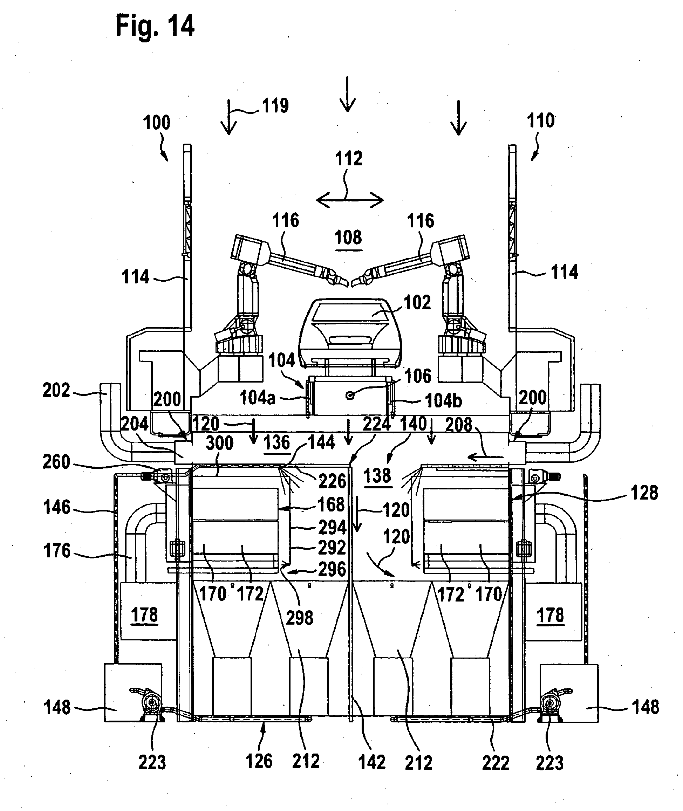

- Fig. 14: einen schematischen vertikalen Schnitt durch eine zweite Ausführungsform einer Lackierkabine mit einer darunter angeordneten Vorrichtung zum Abtrennen von Nasslack-Overspray aus einem Overspray-Partikel enthaltenden Abluftstrom, welche zwei Abtrennvorrichtungen zum Abtrennen des Oversprays aus dem Abluftstrom, zwei Verschließeinrichtungen zum zeitweisen Verschließen des Strömungswegs des Abluftstroms, zwei Luftschleiererzeugungsvorrichtungen zum Erzeugen eines Querluftschleiers längs zweier Strömungsleitflächen und jeweils eine Abdeckung für die Abtrennvorrichtungen zum Erzeugen eines verengten Bereichs im Strömungsweg des Abluftstroms zwischen jeweils einer Verschließvorrichtung und jeweils einer Abtrennvorrichtung umfasst;
- Fig. 15: eine schematische Seitenansicht der Anlage aus Fig. 14;
- Fig. 16: eine schematische Draufsicht von oben auf die Anlage aus den Fig. 14 und 15; und
- Fig. 17: eine schematische perspektivische Darstellung der Anlage aus den Fig. 14 bis 16.

Gleiche oder funktional äquivalente Elemente sind in allen Figuren mit denselben Bezugszeichen bezeichnet.

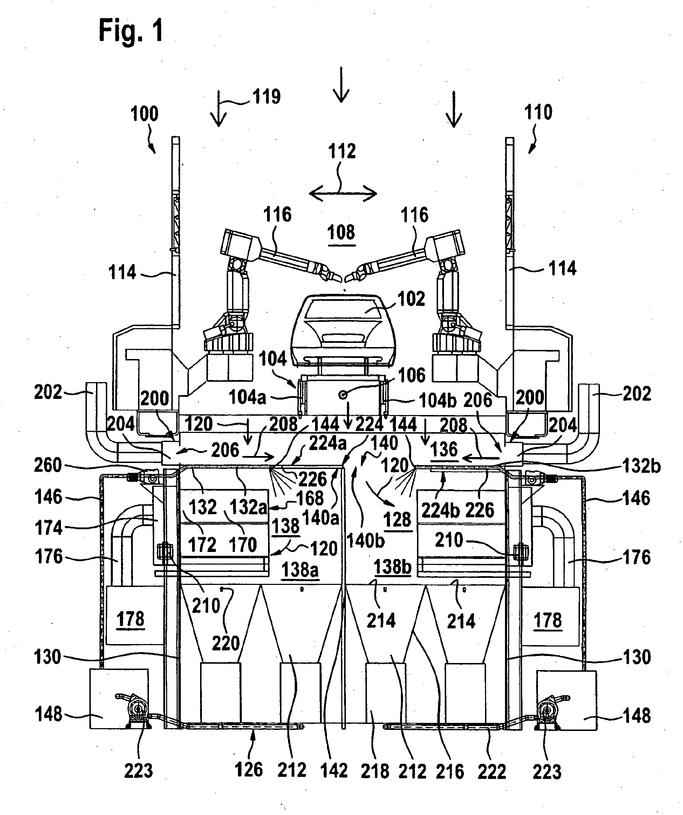

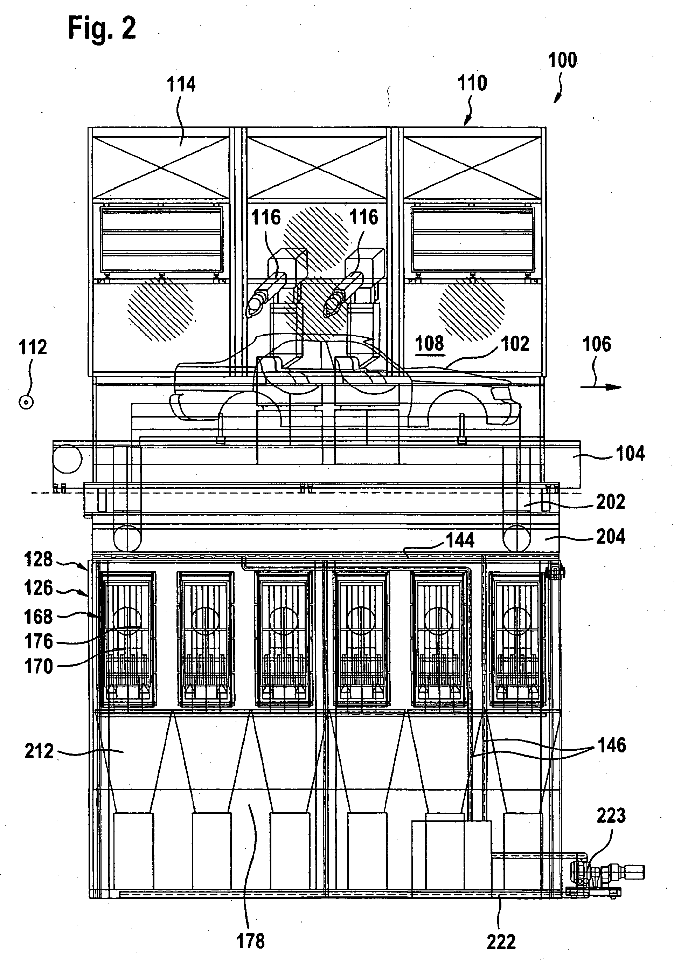

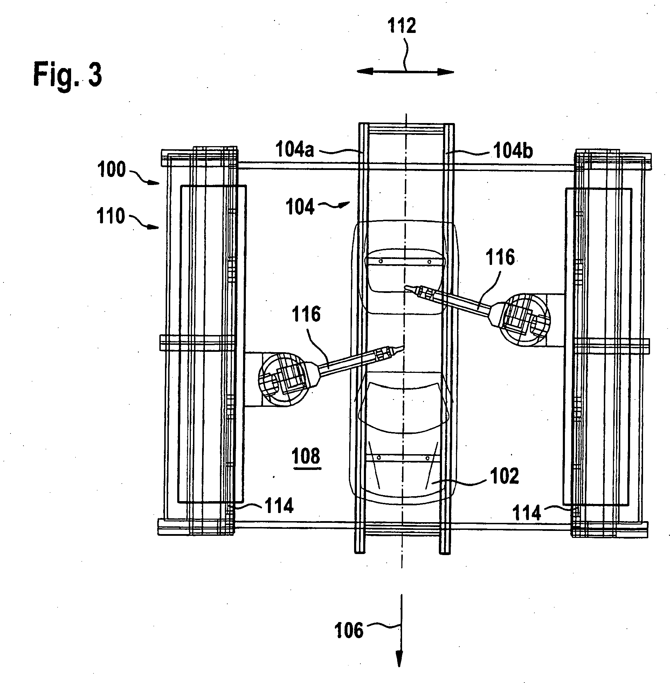

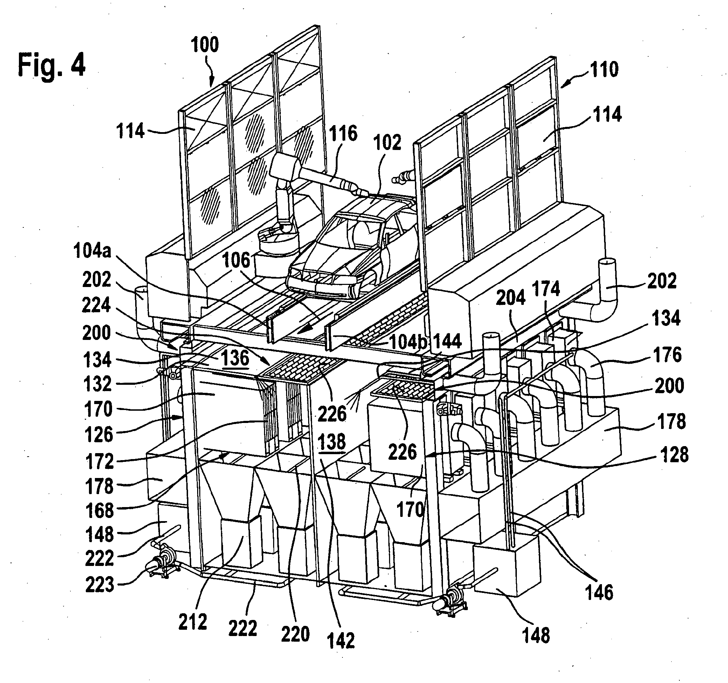

Eine in den Fig. 1 bis 10 dargestellte, als Ganzes mit 100 bezeichnete Anlage zum Spritzlackieren von Fahrzeugkarosserien 102 umfasst eine rein schematisch dargestellte Fördervorrichtung 104, mittels welcher die Fahrzeugkarosserien 102 längs einer Förderrichtung 106 durch einen Applikationsbereich 108 einer als Ganzes mit 110 bezeichneten Lackierkabine bewegt werden können.

Die Fördervorrichtung 104 kann beispielsweise als ein invertierter Kreisförderer oder auch als ein invertierter Einschienenförderer ausgebildet sein.

Insbesondere kann die Fördervorrichtung 104 zweiteilig ausgebildet sein und - wie am besten aus den Fig. 1, 3 und 4 zu ersehen ist - zwei sich parallel zur Förderrichtung 106 erstreckende Förderstränge 104a und 104b umfassen, welche in einer zur Förderrichtung 106 senkrechten horizontalen Richtung voneinander beabstandet sind.

Der Applikationsbereich 108 ist der Innenraum der Lackierkabine 110, welche in ihrer senkrecht zur Förderrichtung 106, die der Längsrichtung der Lackierkabine 110 entspricht, verlaufenden horizontalen Querrichtung 112 zu beiden Seiten der Fördervorrichtung 104 durch jeweils eine Kabinenwand 114 begrenzt ist.

Zu beiden Seiten der Fördervorrichtung 104 sind in der Lackierkabine 110 Spritzlackiereinrichtungen 116 (siehe Fig. 1 bis 4) angeordnet, beispielsweise in Form von Lackierrobotern.

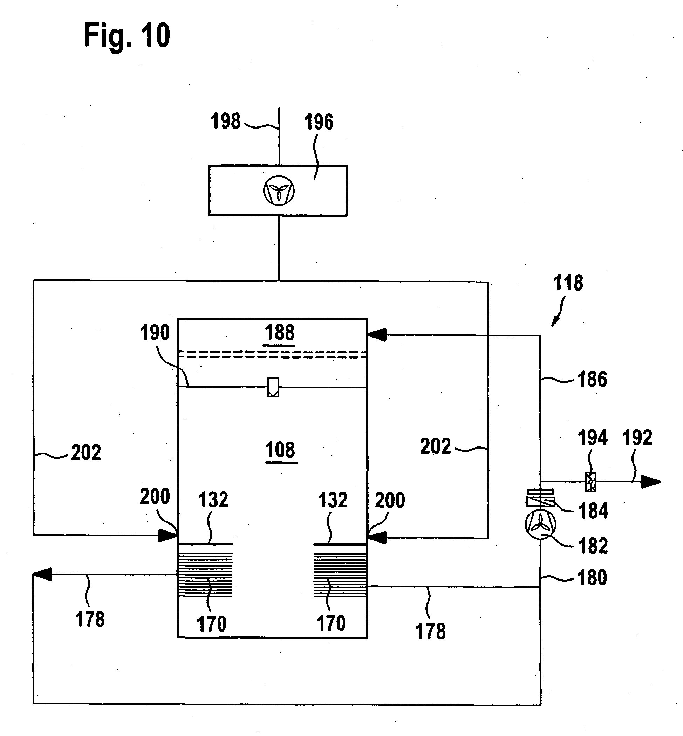

Mittels eines in Fig. 10 schematisch dargestellten Umluftkreislaufs 118 wird ein Luftstrom erzeugt, welcher den Applikationsbereich 108 im wesentlichen vertikal von oben nach unten durchsetzt, wie dies in Fig. 1 durch die Pfeile 119 angedeutet ist.

Dieser Luftstrom nimmt im Applikationsbereich 108 Lack-Overspray in Form von Overspray-Partikeln auf.

Der Begriff "Partikel" umfasst dabei sowohl feste als auch flüssige Teilchen, insbesondere Tröpfchen.

Wird in der Anlage 100 ein Nasslack zum Lackieren verwendet, so besteht der Nasslack-Overspray aus Lacktröpfchen.

Die meisten der Overspray-Partikel weisen eine größte Abmessung im Bereich von ungefähr 1 µm bis ungefähr 100 µm auf.

Der durch die Pfeile 120 dargestellte Abluftstrom verlässt die Lackierkabine 110 nach unten und gelangt in eine als Ganzes mit 126 bezeichnete Vorrichtung zum Abtrennen von Nasslack-Overspray aus dem Abluftstrom 120, welche unterhalb des Applikationsbereichs 108 angeordnet ist.

Die Vorrichtung 126 umfasst eine im wesentlichen quaderförmige Strömungskammer 128, welche sich in der Förderrichtung 106 über die ganze Länge der Lackierkabine 110 hinweg erstreckt und in der Querrichtung 112 der Lackierkabine 110 durch vertikale Seitenwände 130 begrenzt ist, die im wesentlichen mit den seitlichen Kabinenwänden 114 der Lackierkabine 110 fluchten, so dass die Strömungskammer 128 im wesentlichen dieselbe horizontale Querschnittsfläche aufweist wie die Lackierkabine 110 und im wesentlichen vollständig innerhalb der vertikalen Projektion der Grundfläche der Lackierkabine 110 angeordnet ist.

Die Strömungskammer 128 ist durch Strömungsleitelemente 132, welche in diesem Ausführungsbeispiel als im wesentlichen horizontal ausgerichtete Strömungsleitbleche 134 ausgebildet sind, in einen oberen Abschnitt 136 und einen unteren Abschnitt 138 unterteilt.

Der obere Abschnitt 136 und der untere Abschnitt 138 der Strömungskammer 128 sind durch eine Engstelle 140 miteinander verbunden, welche die Form eines Spaltes zwischen den einander gegenüberliegenden freien Rändern der Strömungsleitelemente 132 aufweist und eine Verengung im Strömungsweg des Abluftstroms 120 durch die Strömungskammer 128 bildet.

Die horizontale Querschnittsfläche der Engstelle 140 beträgt dabei von ungefähr 35 % bis ungefähr 50 % der horizontalen Querschnittsfläche der Strömungskammer 128 auf der Höhe der Engstelle 140.

Die Luftgeschwindigkeit des Abluftstroms 120 im Bereich der Engstelle 140 liegt im Bereich von ungefähr 0,6 m/s bis ungefähr 2 m/s.

Der untere Abschnitt 138 der Strömungskammer 128 ist durch eine vertikale, parallel zur Förderrichtung 106 verlaufende Trennwand 142 in einen linken Teilabschnitt 138a und einen rechten Teilabschnitt 138b unterteilt.

In den engstellenseitigen Rand jedes der Strömungsleitelemente 132 ist jeweils eine Precoat-Zuführeinrichtung 144 in Form einer sich in der Förderrichtung 106 erstreckenden Precoatierlanze integriert.

Jede der Precoatierlanzen weis einen Durchmesser von beispielsweise ungefähr 30 mm auf und ist mit einer Vielzahl von Zerstäuberdüsen versehen, welche in einem Abstand von ungefähr 50 mm bis ungefähr 100 mm in der Längsrichtung der Precoatierlanze angeordnet sind und eine Öffnungsgröße im Bereich von ungefähr 3 mm bis ungefähr 15 mm aufweisen.

Diese Zerstäuberdüsen der Precoatierlanzen geben intervallweise ein Precoat-Material in Form eines Sprühnebels in den Abluftstrom 120 ab.

Die Precoat-Zuführeinrichtungen 144 sind jeweils über eine oder mehrere Precoat-Zuführleitungen 146 mit jeweils einem Precoat-Vorlagebehälter 148 verbunden, in welchem das Precoat-Material in fließfähigem Zustand gespeichert ist.

Als Precoat-Material kann grundsätzlich jedes Medium verwendet werden, welches dazu in der Lage ist, den Flüssigkeitsanteil des Nasslack-Oversprays aufzunehmen.

Insbesondere kommen als Precoat-Materialien beispielsweise Kalk, Steinmehl, Aluminiumsilikate, Aluminiumoxide, Siliziumoxide, Pulverlack oder ähnliches in Betracht.

Das Precoat-Material besteht aus einer Vielzahl von Precoat-Partikeln, welche einen mittleren Durchmesser im Bereich von beispielsweise ungefähr 10 µm bis ungefähr 100 µm aufweisen.

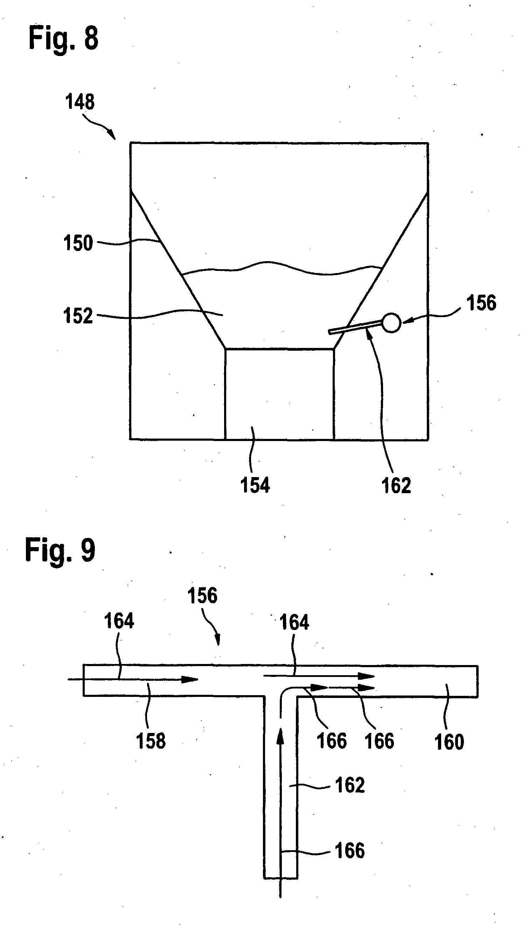

Der Aufbau eines der Precoat-Vorlagebehälter 148 ist in Fig. 8 im einzelnen dargestellt.

Im Innern des Precoat-Vorlagebehälters 148 befindet sich eine Speicherkammer 150, welche sich trichterförmig nach unten verjüngt und ein Fluidbett 152 aus fließfähigem Precoat-Material enthält, welches oberhalb eines Druckluftraums 154 angeordnet ist.

Aus der Speicherkammer 150 des Precoat-Vorlagebehälters .148 wird das Precoat-Material mittels eines Injektors 156 gefördert, welcher in Fig. 9 im einzelnen dargestellt ist.

Der Injektor 156 weist die Form eines T-Stücks mit einem Druckluftanschluss 158, einem Anschluss 160 für eine Precoat-Zuführleitung 146 und mit einer Stichlanze 162, welche in das Fluidbett 152 in der Speicherkammer 150 hineinragt, auf.

Zum Fördern von Precoat-Material wird der Injektor 156 von seinem Druckluftanschluss 158 her zu dem Anschluss 160 für die Precoat-Zuführleitung 146 hin mit Druckluft unter einem Druck von beispielsweise ungefähr 5 bar durchströmt; diese Druckluftströmung ist in Fig. 9 durch die Pfeile 164 angedeutet.

Durch diese Druckluftströmung entsteht ein Sogeffekt, aufgrund dessen das fluidisierte Precoat-Material aus dem Fluidbett 152 durch die Stichlanze 162 in den Injektor 156 gesaugt wird und durch den Anschluss 160 in die Precoat-Zuführleitung 146 gelangt.

Die Precoat-Material-Strömung durch den Injektor 156 ist in Fig. 9 durch die Pfeile 166 angedeutet.

In den Teilabschnitten 138a, 138b des unteren Abschnitts 138 der Strömungskammer 128 ist zu beiden Seiten der Engstellen 140 jeweils eine Abtrennvorrichtung 168 zum Abtrennen von Nasslack-Overspray aus dem Abluftstrom 120 vorgesehen. Die Abtrennvorrichtungen 168 umfassen jeweils mehrere, an den beiden einander gegenüberliegenden vertikalen Seitenwänden 130 der Strömungskammer 128 angeordnete, in der Förderrichtung 106 voneinander beabstandete regenerierbare Oberflächenfilter 170, welche mit ihren Filterelementen 172 in den unteren Abschnitt 138 der Strömungskammer 128 hineinragen (siehe insbesondere die Fig. 1, 2 und 4).

Jedes der regenerierbaren Oberflächenfilter 170 umfasst einen hohl ausgebildeten Grundkörper, an welchem mehrere, beispielsweise im wesentlichen plattenförmig ausgebildete, Filterelemente 172 gehalten sind.

Die Filterelemente 172 können beispielsweise als Platten aus gesintertem Polyethylen, die an ihrer Außenfläche mit einer Membran aus Polytetrafluorethylen (PTFE) versehen sind, ausgebildet sein.

Die Beschichtung aus PTFE dient dazu, die Filterklasse des Oberflächenfilters 170 zu erhöhen (das heißt dessen Durchlässigkeit zu verringern) und ferner das permanente Anhaften des aus dem Abluftstrom 120 abgetrennten Nasslack-Oversprays zu verhindern.

Sowohl das Grundmaterial der Filterelemente 172 als auch deren PTFE-Beschichtung weisen eine Porosität auf, so dass die Abluft durch die Poren in den Innenraum des jeweiligen Filterelements 172 gelangen kann.

Um das Verkleben der Filteroberflächen zu verhindern, sind dieselben ferner mit einer Sperrschicht aus in den Abluftstrom abgegebenem Precoat-Material versehen.

Diese Sperrschicht bildet sich im Betrieb der Vorrichtung 126 durch Abscheidung des in den Abluftstrom 120 abgegebenen Precoat-Materials an den Filteroberflächen und verhindert, dass die Filteroberflächen durch anhaftenden Nasslack-Overspray verkleben.

Precoat-Material aus dem Abluftstrom 120 setzt sich auch an den Begrenzungswänden des unteren Abschnitts 138 der Strömungskammer 128 ab, wo es ebenfalls ein Anhaften von Nasslack-Overspray verhindert.

Der Abluftstrom 120 überstreicht die Filteroberflächen der Filterelemente 172 der regenerierbaren Oberflächenfilter 170, wobei sowohl das mitgeführte Precoat-Material als auch der mitgeführte Nasslack-Overspray an den Filteroberflächen abgeschieden werden, und gelangt durch die porösen Filteroberflächen in die Innenräume der Filterelemente 172, die mit einem Hohlraum innerhalb eines Grundkörpers 174 des jeweiligen Oberflächenfilters 170 verbunden sind.

Der gereinigte Abluftstrom 120 gelangt somit durch den Grundkörper 174 in jeweils ein Abluftrohr 176, welches von dem jeweiligen regenerierbaren Oberflächenfilter 170 zu einem seitlich neben einer vertikalen Seitenwand 130 der Strömungskammer 128 und parallel zur Förderrichtung 106 verlaufenden Abluftkanal 178 führt.

Wie aus der schematischen Darstellung der Fig. 10 zu ersehen ist, gelangt die von dem Nasslack-Overspray gereinigte Abluft aus den beiden Abluftkanälen 178 durch eine Abluftsammelleitung 180 zu einem Umluftgebläse 182, von wo die gereinigte Abluft über ein Kühlregister 184 und eine Zuführleitung 186 einer oberhalb des Applikationsbereichs 108 angeordneten Luftkammer 188, dem sogenannten Plenum, zugeführt wird.

Von der Luftkammer 188 gelangt die gereinigte Abluft über eine Filterdecke 190 in den Applikationsbereich 108 zurück.

Von der Zuführleitung 186 zweigt eine Abluftleitung 192 ab, welche mittels einer Abluftklappe 194 ganz oder teilweise verschließbar ist.

Der durch die Abluftklappe 194 und die Abluftleitung 192 gelangende Teil des gereinigten Abluftstroms wird (beispielsweise über einen Kamin) an die Umgebung abgegeben.

Dieser an die Umgebung abgegebene Teil des Abluftstroms wird durch Frischluft ersetzt, welche einer Zuluftanlage 196 über eine Frischluftzuführleitung 198 zugeführt wird.

Die Frischluft aus der Zuluftanlage 196 wird in die Strömungskammer 128 über zwei Luftschleiererzeugungsvorrichtungen 200 eingespeist, welche über jeweils eine Zuluftleitung 202 mit der Zuluftanlage 196 verbunden sind.

Wie am besten aus Fig. 1 zu ersehen ist, umfasst jede der Luftschleiererzeugungsvorrichtungen 200 jeweils eine sich längs der Förderrichtung 106 erstreckende Zuluftkammer 204, die über die Zuluftleitungen 202 mit Zuluft von der Zuluftanlage 196 gespeist wird und über einen Spalt 206, welcher sich längs der Förderrichtung 106 erstreckt und in vertikaler Richtung eine Ausdehnung im Bereich von beispielsweise ungefähr 15 cm bis ungefähr 50 cm aufweist, in den oberen Abschnitt 136 der Strömungskammer 128 mündet.

Der Spalt 206 jeder Zuluftkammer 204 ist knapp oberhalb jeweils eines der Strömungsleitelemente 132 angeordnet, so dass durch das Einströmen der Zuluft aus der Zuluftkammer 204 in im wesentlichen horizontaler Richtung längs des Strömungsleitelements 132 in die Strömungskammer 128 an der Oberseite des Strömungsleitelements 132 ein Luftschleier gebildet wird, welcher von der Luftschleiererzeugungsvorrichtung 200 ausgehend zu der Engstelle 140 zwischen den Strömungsleitelementen 132 gerichtet ist und dadurch verhindert, dass der mit dem Nasslack-Overspray beladene Abluftstrom 120 aus dem Applikationsbereich 108 zu der Oberseite der Strömungsleitelemente 132 gelangt und der Nasslack-Overspray aus dem Abluftstrom 120 sich an der Oberseite der Strömungsleitelemente 132 absetzt.

Die mittlere Strömungsrichtung der Luft in den von den Luftschleiererzeugungsvorrichtungen 200 erzeugten Querluftschleiern an den Strömungsleitelementen 132 ist in Fig. 1 durch die Pfeile 208 veranschaulicht.

Dadurch, dass die Luftströmung in den Querluftschleiern zu der Engstelle 140 zwischen den Strömungsleitelementen 132 hin gerichtet ist, werden eventuell an der Oberseite der Strömungsleitelemente 132 abgelagerte Overspray-Partikel zu der Engstelle 140 hin bewegt und dort vom Abluftstrom 120 in den unteren Abschnitt 138 der Strömungskammer 128 mitgenommen.

Die über jeweils eine der Luftschleiererzeugungsvorrichtungen 200 dem Innenraum der Strömungskammer 128 zugeführte Luftmenge pro Zeiteinheit beträgt von ungefähr 5 % bis ungefähr 15 % der in dem Abluftstrom 120 aus dem Applikationsbereich 108 enthaltenen Luftmenge pro Zeiteinheit.

Die Zuluftanlage 196 umfasst ein (nicht dargestelltes) Kühlregister, mittels welchem die den Luftschleiererzeugungsvorrichtungen 200 zugeführte Luft so gekühlt wird, dass sie kälter ist als der aus dem Applikationsbereich 108 austretende Abluftstrom 120, wodurch erreicht wird, dass die über die Luftschleiererzeugungsvorrichtung 200 zugeführte Luft in der Strömungskammer 128 nach unten, das heißt zu den zu schützenden Oberflächen der Strömungsleitelemente 132 hin, sinkt.

Beim Weiterströmen dieser gekühlten Zuluft durch den unteren Abschnitt 138 der Strömungskammer 128, durch die Abluftkanäle 178 und durch die Abluftsammelleitung 180 vermischt sich diese gekühlte Zuluft mit dem Abluftstrom 120 aus dem Applikationsbereich 108, so dass die Erwärmung der über die Zuführleitung 186 erneut dem Applikationsbereich 108 zugeführten gereinigten Abluft durch das Umluftgebläse 182 teilweise kompensiert wird.

Diese Kompensation aufgrund der über die Luftschleiererzeugungsvorrichtung 200 zugeführten Luft wird durch die Kühlung der aus dem Umluftgebläse 182 austretenden Luft mittels des Kühlregisters 184 ergänzt.

Der Großteil der durch den Applikationsbereich 108 hindurchgeführten Luft wird somit in einem Umluftkreislauf 118 geführt, welcher den Applikationsbereich 108, die Strömungskammer 128, die Abluftkanäle 178, die Abluftsammelleitung 180, das Umluftgebläse 182, die Zuführleitung 186 und die Luftkammer 188 über dem Applikationsbereich 108 umfasst, wobei eine ständige Aufheizung der im Umluftkreislauf geführten Luft durch die Frischluftzufuhr über die Luftschleiererzeugungsvorrichtungen 200 sowie über die Kühlung mittels des Kühlregisters 184 vermieden wird.

Die mittlere Strömungsgeschwindigkeit der Luft in der Abluftsammelleitung 180 und in der Zuführleitung 186 liegt im Bereich von ungefähr 6 m/s bis ungefähr 12 m/s.

Da die Abtrennung des Nasslack-Oversprays aus dem Abluftstrom 120 mittels der regenerierbaren Oberflächenfilter 170 trocken, das heißt ohne Auswaschung mit einer Reinigungsflüssigkeit, erfolgt, wird die im Umluftkreislauf 118 geführte Luft beim Abtrennen des Nasslack-Oversprays nicht befeuchtet, so dass auch keinerlei Vorrichtungen zur Entfeuchtung der im Umluftkreislauf 118 geführten Luft erforderlich sind.

Ferner sind auch keine Vorrichtungen zur Abtrennung von Nasslack-Overspray aus einer Auswasch-Reinigungsflüssigkeit erforderlich.

Die regenerierbaren Oberflächenfilter 170 werden in bestimmten Zeitintervallen, wenn ihre Beladung mit Nasslack-Overspray ein vorgegebenes Maß erreicht hat, durch Druckluftimpulse abgereinigt.

Die Abreinigung kann (in Abhängigkeit vom Druckverlustanstieg an den Oberflächenfiltern 170) beispielsweise einmal bis sechsmal pro 8-Stunden-Arbeitsschicht, ungefähr alle ein bis 8 Stunden, erfolgen.

Die erforderlichen Druckluftimpulse werden mittels einer Abpulseinheit 210, welche an dem Grundkörper 174 des jeweiligen regenerierbaren Oberflächenfilters 170 angeordnet ist, erzeugt, welche dazu in der Lage ist, Druckluftimpulse an Druckluftrohre abzugeben, welche innerhalb des jeweiligen Grundkörpers 174 verlaufen und von der Abpulseinheit 210 in die Innenräume der Filterelemente 172 führen.

Von den Innenräumen der Filterelemente 172 gelangen die Druckluftimpulse durch die porösen Filteroberflächen in den Außenraum der Filterelemente 172, wobei die an den Filteroberflächen gebildete Sperrschicht aus Precoat-Material und dem daran abgeschiedenen Nasslack-Overspray von den Filteroberflächen abgelöst wird, so dass die Filteroberflächen in ihren abgereinigten Ursprungszustand zurückversetzt werden.

Der Druckluftvorrat in den Abpulseinheiten 210 wird über (nicht dargestellte) Druckluftzuführleitungen aus einem bauseitig vorhandenen Druckluftnetz ergänzt.

Nach dem Abreinigen wird durch Zugabe von Precoat-Material in den Abluftstrom 120 mittels der Precoat-Zuführeinrichtungen 144 eine neue Sperrschicht an den Filteroberflächen erzeugt, wobei die Sperrschicht aus 100 % nasslackfreiem Precoat-Material oder auch aus nasslackbeladenem Precoat-Material bestehen kann.

Das von den Filteroberflächen der regenerierbaren Oberflächenfilter 170 abgereinigte, nasslackhaltige Material gelangt in Precoat-Aufnahmebehälter 212, von denen mehrere im unteren Abschnitt 138 der Strömungskammer 128 so angeordnet sind, dass ihre nach oben gewandten Mündungsöffnungen 214 im wesentlichen den gesamten horizontalen Querschnitt der Strömungskammer 128 überdecken. Auf diese Weise ist gewährleistet, dass das gesamte von den Oberflächenfiltern 170 abgereinigte Material sowie das bereits vor Erreichen der Oberflächenfilter 170 aus dem Abluftstrom 120 abgetrennte Precoat- und Overspray-Material durch die Mündungsöffnungen 214 in die Precoat-Aufnahmebehälter 212 gelangt.

Jeder der Precoat-Aufnahmebehälter 212 umfasst ein Oberteil 216, welches sich nach unten hin trichterförmig verjüngt, sowie ein im wesentlichen quaderförmiges Unterteil 218.

Die trichterförmig gegeneinander geneigten Seitenwände des Oberteils 216 des Precoat-Aufnahmebehälters 212 schließen miteinander einen Trichterwinkel von ungefähr 50° bis ungefähr 70° ein.

Nahe der oberen Mündungsöffnung 214 ist jedes Oberteil 216 eines Precoat-Aufnahmebehälters 212 mit einer das Oberteil 216 querenden Druckluftlanze 220 versehen, mittels welcher das in dem Oberteil 216 des Precoat-Aufnahmebehälters 212 befindliche Material mit einem Druckluftpuls beaufschlagt und somit aufgewirbelt werden kann.

Das aufgewirbelte Material kann durch die Mündungsöffnung 214 nach oben gelangen und sich beispielsweise an den Filteroberflächen der regenerierbaren Oberflächenfilter 170 oder an der vertikalen Trennwand 142 absetzen, welche durch die Beschichtung mit dem Precoat-Material vor dem Anhaften von Nasslack-Overspray aus dem Abluftstrom 120 geschützt wird.

Aus den Unterteilen 218 der Precoat-Aufnahmebehälter 212 kann das darin enthaltene Material, ein Gemisch aus Precoat-Material und Nasslack-Overspray, durch jeweils eine Absaugleitung 222, in welcher eine Precoat-Absaugpumpe 223 angeordnet ist, in jeweils einen der Precoat-Vorlagebehälter 148 gefördert werden, um von dort aus - wie vorstehend beschrieben - durch die Precoat-Zuführleitung 146 einer erneuten Verwendung als Precoat-Material zugeführt zu werden.

Außer den Precoat-Vorlagebehältern 148, aus denen der Precoat-Zuführleitung 146 nasslackbeladenes Precoat-Material zugeführt wird, kann die Vorrichtung 126 auch weitere Precoat-Vorlagebehälter umfassen, welche nicht mit den Precoat-Aufnahmebehältern 212 verbunden sind, sondern mit nasslackfreiem Precoat-Material befüllt sind, um der Precoat-Zuführleitung 146 wahlweise nasslackfreies Precoat-Material zuzuführen.

Diese Zwischenprecoatierung der Oberflächenfilter 170 und der vertikalen Trennwand 142 kann in Zeitintervallen von beispielsweise ungefähr 15 Minuten bis ungefähr 1 Stunde durchgeführt werden.

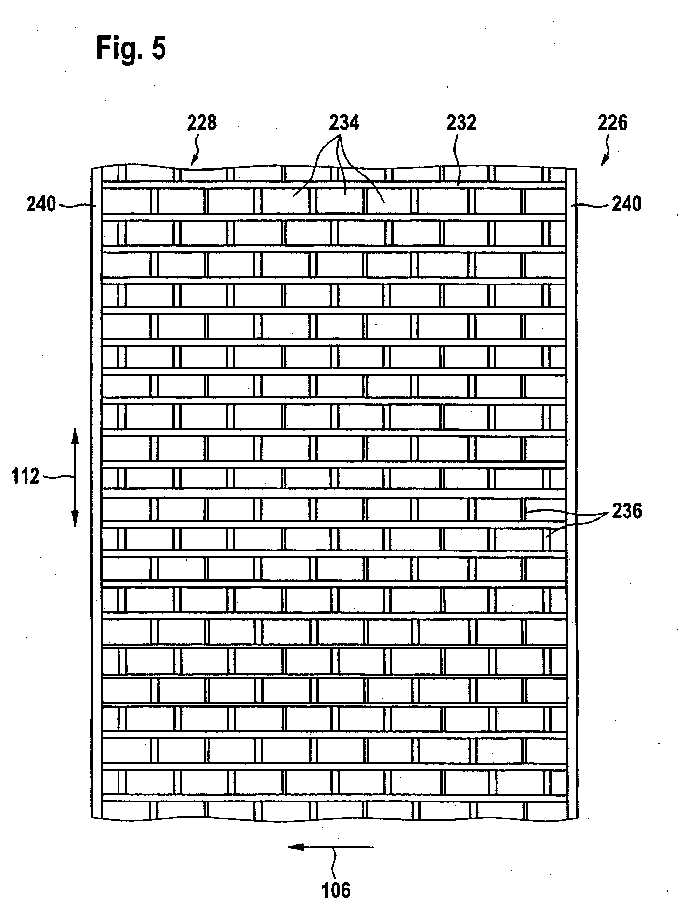

Um zu verhindern, dass während dieser Zwischenprecoatierungsvorgänge oder während des Abreinigungsvorgangs und der anschließenden Precoatierung der Oberflächenfilter 170 Precoat-Material durch die Engstelle 140 in den Applikationsbereich 108 oder Nasslack-Overspray durch die Engstelle 140 zu den Oberflächenfiltern 170 gelangt, wird die Engstelle 140 während dieser Vorgänge mittels zweier Verschließvorrichtungen 224 geschlossen, von denen eine in den Fig. 5 bis 7 im Detail dargestellt ist.

Eine linke (in Fig. 1 geschlossene) Verschließvorrichtung 224a dient zum Verschließen eines linken Abschnitts 140a der Engstelle 140, welcher einerseits durch den rechten Rand des linken Strömungsleitelements 132a und andererseits durch den oberen Rand der vertikalen Trennwand 142 begrenzt wird.

Die rechte (in Fig. 1 geöffnete) Verschließvorrichtung 224b dient zum Verschließen eines rechten Abschnitts 140b der Engstelle 140, welcher einerseits vom linken Rand des rechten Strömungsleitelements 132b und andererseits von der Oberseite der vertikalen Trennwand 142 begrenzt wird.

Jede der Verschließvorrichtungen 224 umfasst jeweils ein Verschließelement 226 mit einer Tragstruktur 228 aus einem metallischen Material und einem an der Tragstruktur 228 durch Klemmwirkung gehaltenen Filterelement 230.

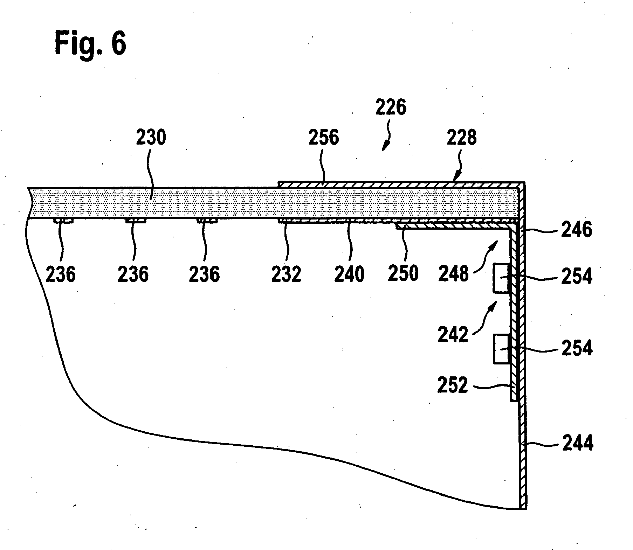

Wie am besten aus den Fig. 5 und 6 zu ersehen ist, umfasst die Tragstruktur 228 eine im wesentlichen ebene Platte 232, welche mit einem Muster aus wabenförmig angeordneten Luftdurchtrittsöffnungen 234 versehen ist.

Die Platte 232 kann insbesondere aus einem verzinkten Stahlmaterial oder aus einem Edelstahlmaterial gebildet sein.

Die Materialstärke der Platte 232 beträgt beispielsweise ungefähr 4 mm.

Die Ausdehnung der Luftdurchtrittsöffnungen 234 in der Querrichtung 112 beträgt beispielsweise ungefähr 40 mm. Die Ausdehnung der Luftdurchtrittsöffnungen 234 längs der Förderrichtung 106 beträgt beispielsweise ungefähr 80 mm.

Die im wesentlichen rechteckigen Luftdurchtrittsöffnungen 234 sind in mehreren, in der Querrichtung 112 aufeinanderfolgenden Reihen angeordnet, wobei die Luftdurchtrittsöffnungen 234 einer Reihe gegenüber den Luftdurchtrittsöffnungen 234 der beiden benachbarten Reihen versetzt angeordnet sind, beispielsweise ungefähr um die halbe Ausdehnung der Luftdurchtrittsöffnungen 234 längs der Förderrichtung 106 versetzt.

Die Luftdurchtrittsöffnungen 234 in der Platte 232 sind durch dazwischenliegende Stege 236 voneinander getrennt, welche sich in der Querrichtung 112 oder in der Förderrichtung 106 erstrecken und jeweils eine Breite von beispielsweise ungefähr 8 mm aufweisen.

An ihren seitlichen Rändern ist die Platte 232 mit jeweils einem Randbereich 240 versehen, der nicht mit Durchtrittsöffnungen versehen ist und eine Breite von beispielsweise ungefähr 30 mm aufweist.

Auf der Platte 232 liegt ein Filterelement 230 auf, welches die Form einer Filtermatte aufweist und sich auf den Stegen 236 der Platte 232 sowie auf den Randbereichen 240 der Platte 232 abstützt.

Das Filterelement 230 kann beispielsweise als eine Matte aus Glasfasern ausgebildet sein, ist luftdurchlässig und weist eine Dicke von beispielsweise ungefähr 50 mm bis ungefähr 100 mm auf.

Das Flächengewicht des Filterelements 230 kann beispielsweise ungefähr 220 g/m² bis ungefähr 350 g/m² betragen.

Geeignete Filterelemente 230 werden beispielsweise von der Firma Freudenberg Vliesstoffe KG, 69465 Weinheim, Deutschland unter der Bezeichnung "Farbnebelabscheider Typ PS50" oder "Farbnebelabscheider Typ PS100" vertrieben.

Das luftdurchlässige Filterelement 230 und die Platte 232 mit den Luftdurchtrittsöffnungen 234 ermöglichen zwar den Durchtritt von Luft durch das Verschließelement 226; dabei wird jedoch in der Luft mitgeführtes Precoat-Material oder darin mitgeführter Nasslack-Overspray von dem Filterelement 230 zurückgehalten, so dass weder Precoat-Material noch Nasslack-Overspray durch das Verschließelement 226 hindurchgelangen können.

Um das Filterelement 230 durch Klemmwirkung an der Tragstruktur 228 festzulegen, umfasst das Verschließelement 226 mehrere Klemmeinrichtungen 242, die an gewinkelten Rahmenprofilen 244 angeordnet sind, welche jeweils einen vertikalen Schenkel 246 und einen die Platte 232 und das Filterelement 230 übergreifenden horizontalen Schenkel 256 aufweisen und sich längs der Ränder der Platte 232 erstrecken.

Jede dieser Klemmeinrichtungen 242 umfasst ein Winkelelement 248 mit einem horizontalen Schenkel 250 und einem vertikalen Schenkel 252, wobei der horizontale Schenkel 250 an dem Randbereich 240 der Platte 232 festgelegt und der vertikale Schenkel 252 mit einem (aus der Darstellung der Fig. 6 nicht ersichtlichen) vertikalen Langloch versehen ist.

In dieses vertikale Langloch greifen mehrere, beispielsweise zwei, Klemmschrauben 254 ein, welche in Gewindelöcher an dem Rahmenprofil 244 eingedreht sind, so dass das Rahmenprofil 244 relativ zu dem vertikalen Schenkel 252 des Winkelelements 248 in vertikaler Richtung verschiebbar und in einer gewünschten Position durch Anziehen der Klemmschrauben 254 festklemmbar ist.

Wird das Rahmenprofil 244 in einer unteren Klemmposition relativ zu dem Winkelelement 248 festgeklemmt, so übt der horizontale Schenkel 256 des Rahmenprofils 244 einen Druck auf den Randbereich des Filterelements 230 aus, so dass das Filterelement 230 zwischen dem Rahmenprofil 244 und der Platte 232 der Tragstruktur 228 festgeklemmt ist.

Die Klemmung des Filterelements 230 an der Tragstruktur 228 ist lösbar, um das Filterelement 230 nach einer gewissen Betriebszeit gegen ein neues Filterelement 230 auszutauschen.

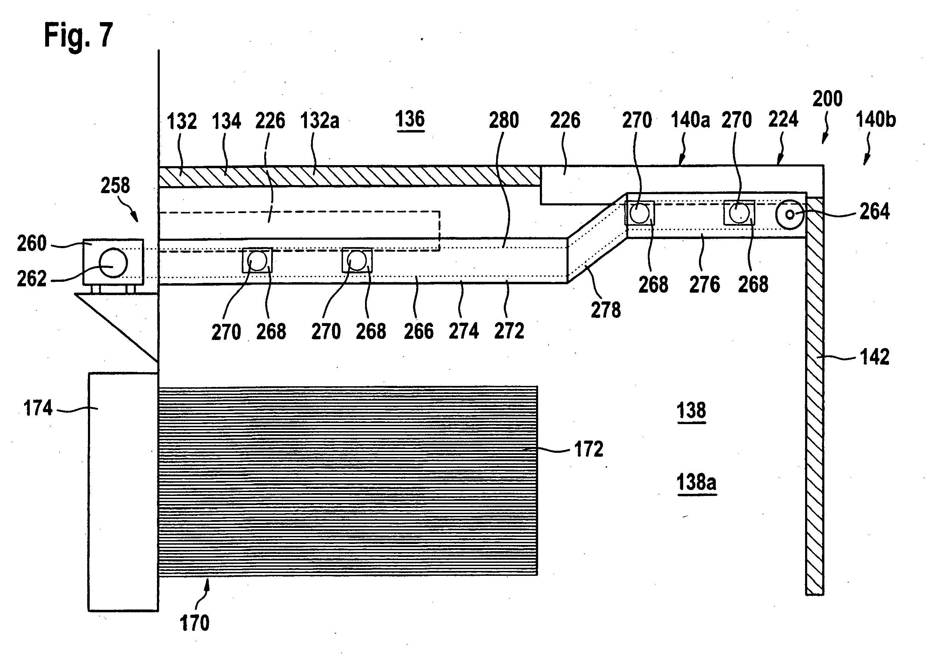

Mittels einer in Fig. 7 dargestellten Bewegungseinrichtung 258 ist das vorstehend beschriebene Verschließelement 226 von einer Offenstellung, in welcher das Verschließelement 226 unterhalb des Strömungsleitelements 132 angeordnet ist (in Fig. 7 in gebrochener Linie dargestellt) in eine Schließstellung bewegbar, in welcher das Verschließelement 226 den ihm zugeordneten Abschnitt 140a der Engstelle 140 verschließt (in Fig. 7 in durchgezogener Linie dargestellt).

Die Bewegungseinrichtung 258 umfasst einen Elektromotor 260, welcher ein Antriebszahnrad 262 zu einer Drehbewegung antreiben kann, sowie einen um das Antriebszahnrad 262 und ein Umlenkzahnrad 264 (und gegebenenfalls weitere, nicht dargestellte Umlenkzahnräder) gelegten Zahnriemen 266. An dem oberen Trum 280 des Zahnriemens 266 sind zwei in der Längsrichtung des Zahnriemens voneinander beabstandete Aufnahmeplatten 268 festgelegt, an denen von einem Rahmenprofil 244 des Verschließelements 226 längs der Förderrichtung 106 abstehende, im wesentlichen zylindrische Zapfen 270 um ihre horizontalen Achsen schwenkbar gelagert sind.

Der Zahnriemen 266 folgt dem Verlauf einer Führungsschiene 272, welche einen unteren Abschnitt 274, an welchem das Verschließelement 226 in der Offenstellung seitlich geführt ist, einen oberen Abschnitt 276, an welchem das Verschließelement 226 in der Schließstellung seitlich geführt ist, und einen den oberen Abschnitt 276 mit dem unteren Abschnitt 274 verbindenden, gegen die Horizontale geneigten Mittelabschnitt 278 aufweist.

Wenn sich das Verschließelement 226 in der (in Fig. 7 in gebrochener Linie dargestellten) Offenstellung befindet, so kann das Verschließelement 226 aus dieser Offenstellung in die (in Fig. 7 in durchgezogener Linie dargestellte) Schließstellung bewegt werden, indem der Elektromotor 260 das Antriebszahnrad 262 im Uhrzeigersinn dreht, so dass sich das obere Trum 280 des Zahnriemens 266 mit den daran festgelegten Aufnahmeplatten 268 nach rechts bewegt, wobei das über die Zapfen 270 schwenkbar an den Aufnahmeplatten 268 gehaltene Verschließelement 226 von den Aufnahmeplatten 268 mit nach rechts gezogen wird. Dabei ist das Verschließelement 226 an der Führungsschiene 272 geführt, so dass sich das Verschließelement 226 bei der Schließbewegung den Mittelabschnitt 278 der Führungsschiene 272 hinauf in den oberen Abschnitt 276 der Führungsschiene 272 hineinbewegt, bis die Schließstellung erreicht ist, in welcher das Verschließelement 226 den Abschnitt 140a der Engstelle 140 vollständig überdeckt und dabei mit seinem hinteren Rand an dem vorderen Rand des Strömungsleitelements 132 anliegt und mit seinem vorderen Rand auf der Oberseite der vertikalen Trennwand 142 aufliegt, so dass das Verschließelement 226 in der Schließstellung durch die vertikale Trennwand 142 nach unten hin abgestützt wird.

Die metallische Tragstruktur 228, die Führung des Verschließelements 226 an der Führungsschiene 272 und die vertikale Trennwand 142 sind von einer solchen mechanischen Festigkeit, dass das Verschließelement 226 in der Schließstellung von einer Bedienperson begehbar ist, um beispielsweise Wartungs- oder Reparaturarbeiten an der Fördervorrichtung 104 auszuführen.

Zu diesem Zweck beträgt der Abstand zwischen der Oberseite des Verschließelements 226 in der Schließstellung einerseits und der Unterkante der von der Fördervorrichtung 104 geförderten Fahrzeugkarosserien 102 von ungefähr 1,5 m bis ungefähr 2 m.

Aufgrund der Begehbarkeit des Verschließelements 226 in der Schließstellung ist es nicht erforderlich, die sonst üblichen begehbaren Gitterroste vorzusehen, welche den Applikationsbereich 108 der Lackierkabine 110 nach unten begrenzen.

Wie bereits ausgeführt, ist das Verschließelement 226 in der Schließstellung von dem Abluftstrom 120 weiterhin durchströmbar; allerdings stellt das Verschließelement 226 einen deutlich größeren Strömungswiderstand dar als die unverschlossene Engstelle 140, weshalb der Volumenstrom durch das Verschließelement 226 deutlich kleiner ist als der Volumenstrom durch den unverschlossenen Abschnitt 140a der Engstelle 140.

Aus dem unteren Abschnitt 138 der Strömungskammer 128 stammendes Precoat-Material oder Nasslack-Overspray werden während der Schließphase von dem Filterelement 230 des Verschließelement 226 ausgefiltert und können daher nicht in den Applikationsbereich 108 gelangen.

Aus dem oberen Abschnitt 136 der Strömungskammer 128 stammender Nasslack-Overspray wird während der Schließphase von dem Filterelement 230 des Verschließelements 226 ausgefiltert und kann daher nicht zu den Oberflächenfiltern 170 gelangen.

Während der Schließphase können daher die regenerierbaren Oberflächenfilter 170 abgereinigt werden, ohne dass abgereinigtes Precoat-Material und abgereinigter Nasslack-Overspray aus dem unteren Abschnitt 138 der Strömungskammer 128 heraus nach oben gelangen können oder Nasslack-Overspray aus dem oberen Abschnitt 136 der Strömungskammer 128 nach unten gelangen kann.

Ferner kann das Verschließelement 226 auch in die Schließstellung gebracht werden, wenn die Oberflächenfilter 170 und/oder die den unteren Abschnitt 138 der Strömungskammer 128 begrenzenden Wände mittels der Precoat-Zuführeinrichtungen 144 und/oder durch Aufwirbeln von Precoat-Material aus den Precoat-Aufnahmebehältern 212 mittels der Druckluftlanzen 220 mit Precoat-Material beschichtet werden sollen. Auch während solcher Precoatierungsphasen kann kein Precoat-Material durch das sich in der Schließstellung befindliche Verschließelement 226 aus dem unteren Abschnitt 138 der Strömungskammer 128 nach oben in den Applikationsbereich 108 gelangen.

Nach Beendigung der Abreinigungsphase bzw. der Precoatierungsphase wird das Verschließelement 226 in die Offenstellung zurückbewegt, indem das Antriebszahnrad 262 durch den Elektromotor 260 im Gegenuhrzeigersinn angetrieben wird, wodurch das obere Trum 280 des Zahnriemens 266 mit den daran festgelegten Aufnahmeplatten 268 nach links bewegt wird und somit das Verschließelement 226 in die (in Fig. 7 in gebrochener Linie dargestellte) Offenstellung zurückzieht.

Die beiden Verschließvorrichtungen 224 für den linken Abschnitt 140a der Engstelle 140 und für den rechten Abschnitt 140b der Engstelle 140 können gleichzeitig oder zeitlich gegeneinander versetzt betätigt werden.

Im ersten Falle werden beide Abschnitte 140a, 140b der Engstelle 140 gleichzeitig verschlossen, um Abreinigungs- oder Precoatierungsvorgänge in den beiden Teilabschnitten 138a, 138b des unteren Abschnitts 138 der Strömungskammer 128 zeitgleich durchzuführen.

Im letzteren Falle werden die Abschnitte 140a, 140b der Engstelle 140 zu unterschiedlichen Zeitpunkten verschlossen, um Abreinigungs- oder Precoatierungsvorgänge in den beiden Teilabschnitten 138a, 138b des unteren Abschnitts 138 der Strömungskammer 128 zeitlich versetzt zueinander durchzuführen.

Statt eines luftdurchlässigen Verschließelements 226 mit einem Filterelement 230 kann auch ein vollständig geschlossenes, luftundurchlässiges Verschließelement verwendet werden.

Ein solches luftundurchlässiges Verschließelement kann beispielsweise eine vollständig geschlossene metallische Platte ohne Luftdurchtrittsöffnungen umfassen.

In diesem Fall wird der jeweilige Abschnitt 140a, 140b der Engstelle 140 nicht vollständig durch das Verschließelement 226 geschlossen; vielmehr wird das luftundurchlässige Verschließelement in diesem Fall in eine Schließstellung gebracht, in welcher es den jeweils zu verschließenden Abschnitt 140a, 140b der Engstelle 140 nicht vollständig überdeckt, sondern ein Spalt mit einer Breite von beispielsweise ungefähr 500 mm bis ungefähr 700 mm für den Durchtritt des Abluftstroms 120 durch die Engstelle 140 offenbleibt.

Aufgrund der Verengung der Engstelle wird auch in diesem Fall durch das teilweise Verschließen des Abschnitts 140a bzw. 140b der Engstelle 140 die Menge des durch die Engstelle 140 nach oben gelangenden Precoat-Materials sowie die Menge des durch die Engstelle 140 nach unten gelangenden Nasslack-Oversprays deutlich reduziert.

Die Schließzeit der Verschließvorrichtungen 224 beträgt beispielsweise ungefähr 2 Minuten bis ungefähr 6 Minuten bei einem Abreinigungs- und Neuprecoatierungsvorgang und beispielsweise ungefähr 1 Minute bis ungefähr 2 Minuten bei einem Zwischenprecoatiervorgang.

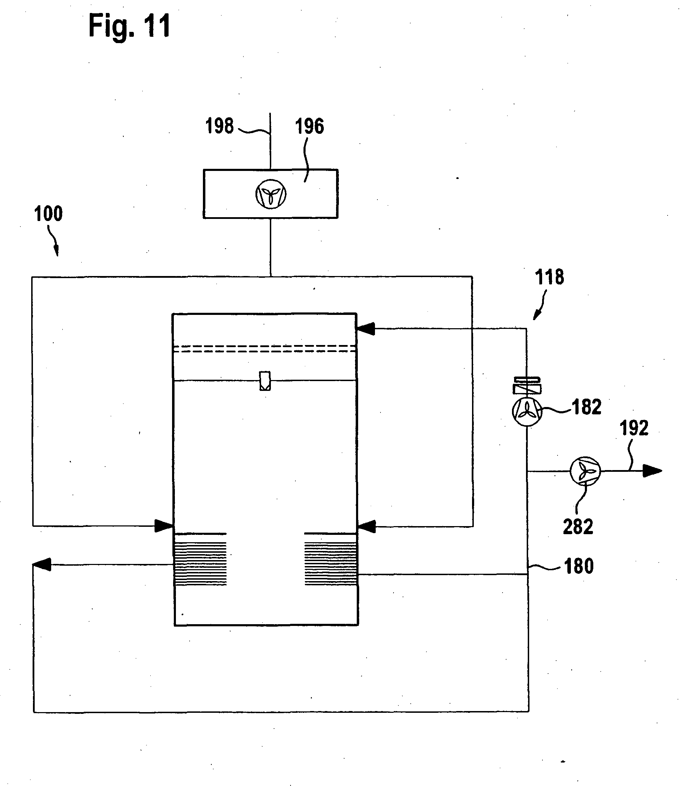

Eine in Fig. 11 dargestellte zweite Ausführungsform einer Anlage 100 zum Lackieren von Fahrzeugkarosserien 102 unterscheidet sich von der vorstehend beschriebenen ersten Ausführungsform lediglich dadurch, dass die Abluftleitung 192, über welche Abluft aus dem Umluftkreislauf 118 entnommen und an die Umgebung abgegeben wird, nicht von der stromabwärts von dem Umluftgebläse 182 angeordneten Zuführleitung 186, sondern von der stromaufwärts von dem Umluftgebläse 182 angeordneten Abluftsammelleitung 180 abzweigt.

Außerdem ist bei dieser Ausführungsform in der Abluftleitung 192 statt einer Abluftklappe 194 ein Abluftgebläse 282 vorgesehen.

Diese Ausgestaltung bietet den Vorteil, dass mittels der Zuluftanlage 196 und des Abluftgebläses 282 auch dann eine vertikal von oben nach unten gerichtete Luftströmung durch den Applikationsbereich 108 und die Strömungskammer 128 aufrechterhalten werden kann, wenn das Umluftgebläse 182 ausfallen sollte. Durch die Aufrechterhaltung einer solchen vertikalen Luftströmung durch den Applikationsbereich 108 wird vermieden, dass Partikel aus der Strömungskammer 128 in den Applikationsbereich 108 aufsteigen und die dort befindlichen Fahrzeugkarosserien 102 verunreinigen.

Im übrigen stimmt die in Fig. 11 dargestellte zweite Ausführungsform hinsichtlich Aufbau und Funktion mit der in den Fig. 1 bis 10 dargestellten ersten Ausführungsform überein, auf deren vorstehende Beschreibung insoweit Bezug genommen wird.

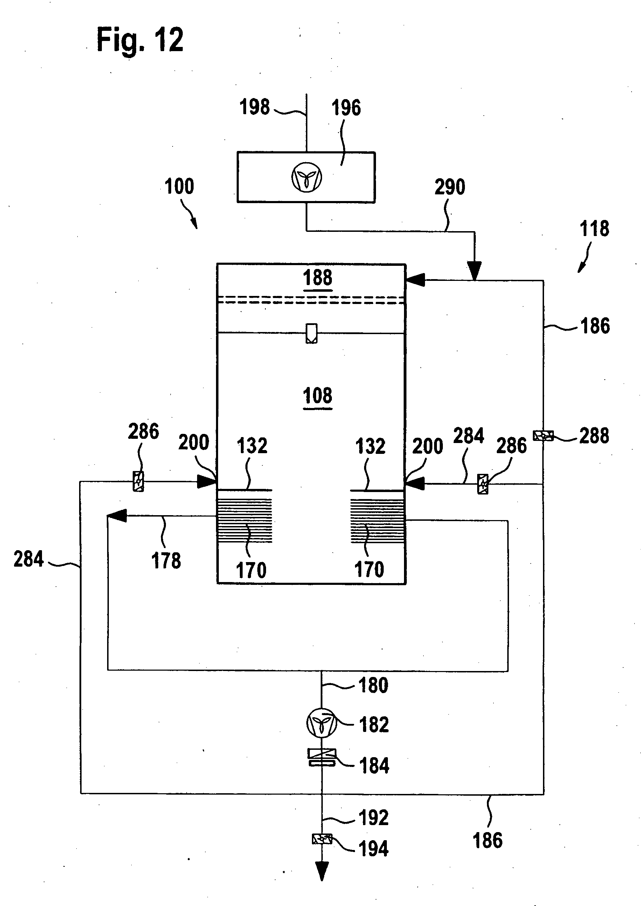

Eine in Fig. 12 dargestellte dritte Ausführungsform einer Anlage 100 zum Lackieren von Fahrzeugkarosserien 102 unterscheidet sich von der vorstehend beschriebenen ersten Ausführungsform dadurch, dass die Luftschleiererzeugungsvorrichtungen 200 nicht mit von der Zuluftanlage 196 kommender Frischluft gespeist werden, sondern statt dessen mit gereinigter Abluft, welche aus dem Umluftkreislauf 118 abgezweigt wird.

Zu diesem Zweck sind die Luftschleiererzeugungsvorrichtungen 200 über jeweils eine Abzweigleitung 284 mit der Zuführleitung 186 verbunden, welche von dem Umluftgebläse 182 und dem nachgeschalteten Kühlregister 184 zu der Luftkammer 188 über dem Applikationsbereich 108 führt.

In den Abzweigleitungen 284 sind Steuerklappen 286 angeordnet, und in der Zuführleitung 186 ist stromabwärts von den Abzweigungen der Abzweigleitungen 284 ebenfalls eine Steuerklappe 288 angeordnet, so dass der Umluftstrom je nach Bedarf zwischen den Luftschleiererzeugungsvorrichtungen 200 einerseits und dem die Luftkammer 188 und dem Applikationsbereich 108 durchsetzenden Luftstrom aufgeteilt werden kann.

Vorzugsweise werden die Steuerklappen 286, 288 so eingestellt, dass die pro Zeiteinheit durch die Luftschleiererzeugungsvorrichtungen 200 gelangende Luftmenge von ungefähr 5 % bis ungefähr 15 % der durch den Applikationsbereich 108 gelangenden Luftmenge beträgt.

Die über die Abluftleitung 192 mit der Abluftklappe 194 aus dem Umluftkreislauf 118 entnommene Abluftmenge wird bei dieser Ausführungsform dadurch ersetzt, dass dem Umluftkreislauf 118 von der Zuluftanlage 196 kommende Frischluft über eine Zuluftleitung 290 zugeführt wird, welche stromabwärts von der Steuerklappe 288 in die Zuführleitung 186 mündet.

Diese Ausführungsform kommt ohne ein zusätzliches Abluftgebläse aus.

Im übrigen stimmt die in Fig. 12 dargestellte dritte Ausführungsform hinsichtlich Aufbau und Funktion mit der in den Fig. 1 bis 10 dargestellten ersten Ausführungsform überein, auf deren vorstehende Beschreibung insoweit Bezug genommen wird.

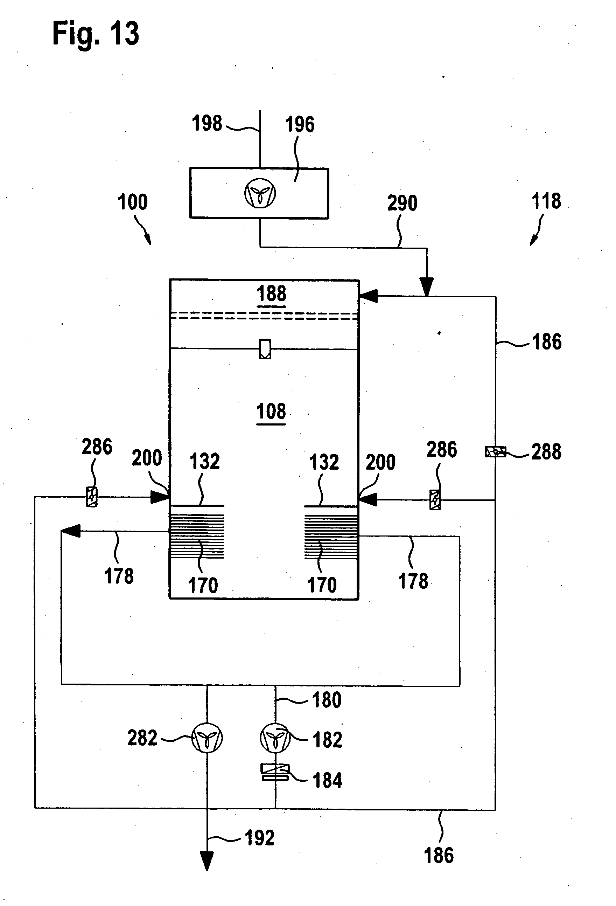

Eine in Fig. 13 dargestellte vierte Ausführungsform einer Anlage 100 zum Lackieren von Fahrzeugkarosserien 102 unterscheidet sich von der vorstehend beschriebenen dritten Ausführungsform dadurch, dass die Abluftleitung 192, über welche Abluft aus dem Umluftkreislauf 118 in die Umgebung abgegeben wird, statt mit einer Abluftklappe 194 mit einem Abluftgebläse 282 versehen ist.

Hierdurch ist es möglich, eine vertikal nach unten gerichtete Luftströmung durch den Applikationsbereich 108 mittels der Zuluftanlage 196 und des Abluftgebläses 282 auch dann aufrechtzuerhalten, wenn das Umluftgebläse 182 ausfallen sollte. Durch diesen Notfallbetrieb ist es möglich, das Aufsteigen von Partikeln, insbesondere von Precoat-Material und Nasslack-Overspray, aus der Strömungskammer 128 in den Applikationsbereich 108 auch bei Ausfall des Umluftgebläses 182 zu vermeiden.

Im übrigen stimmt die in Fig. 13 dargestellte vierte Ausführungsform hinsichtlich Aufbau und Funktion mit der in Fig. 12 dargestellten dritten Ausführungsform überein, auf deren vorstehende Beschreibung insoweit Bezug genommen wird.

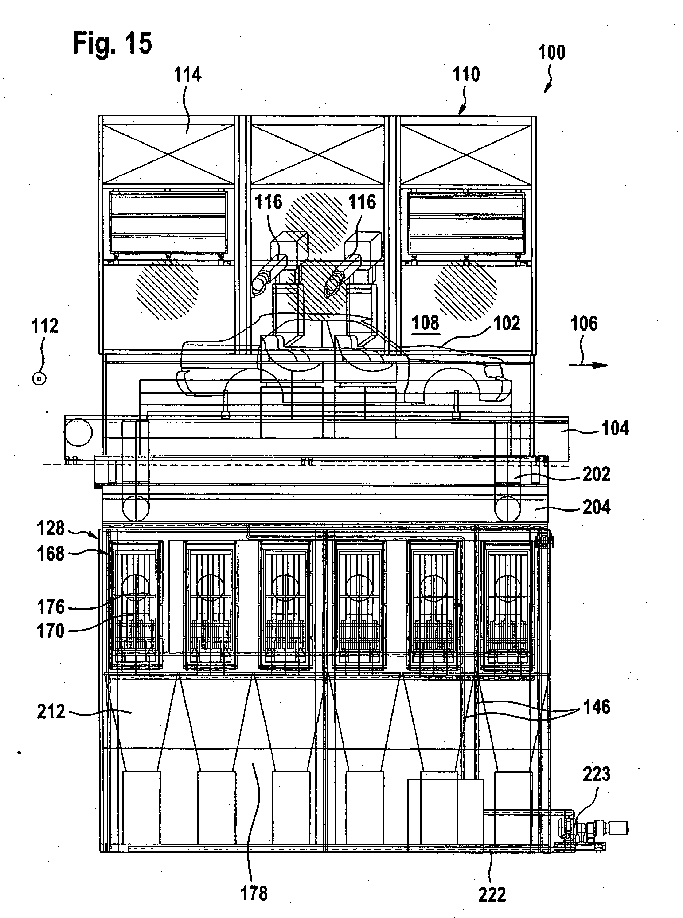

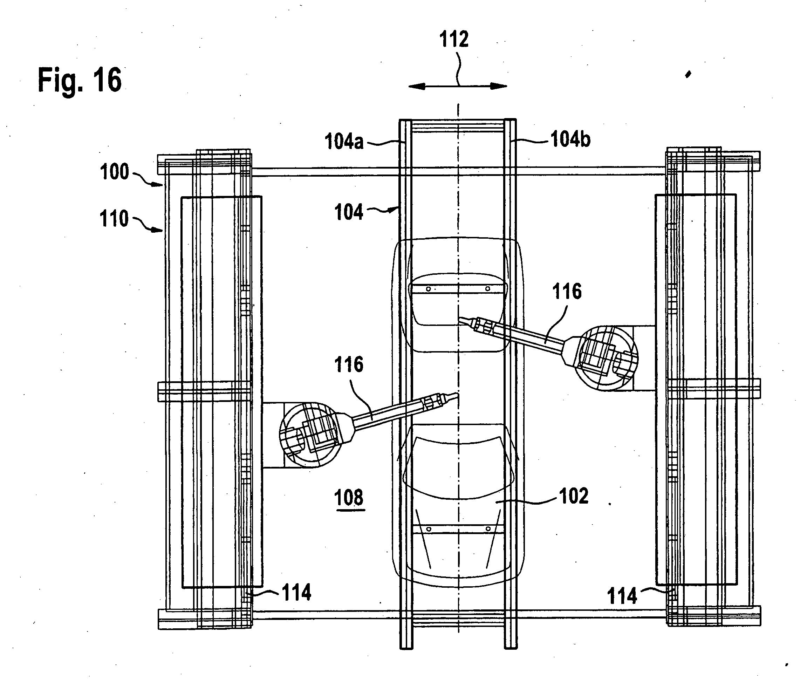

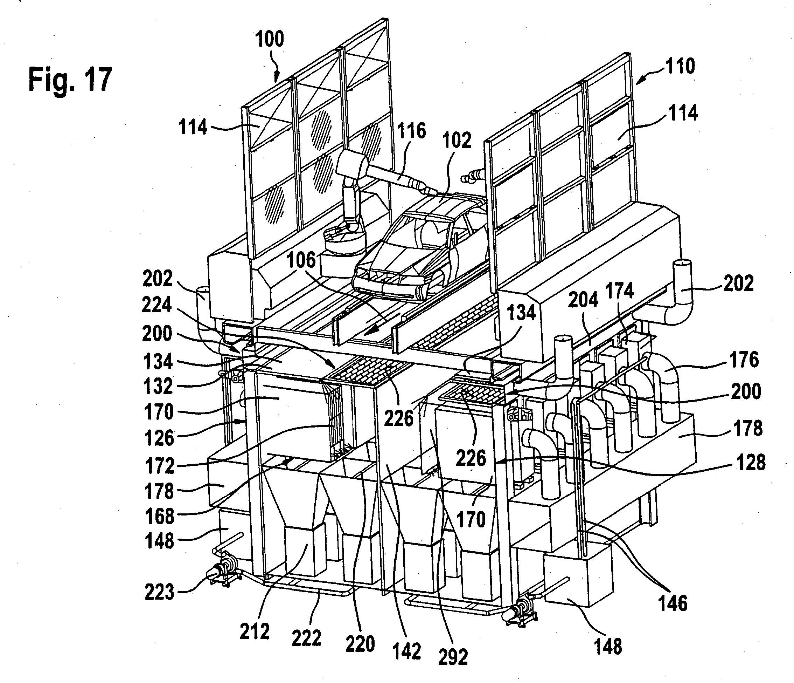

Eine in den Fig. 14 bis 17 dargestellte fünfte Ausführungsform einer Anlage 100 zum Lackieren von Fahrzeugkarosserien 102 unterscheidet sich von der vorstehend beschriebenen ersten Ausführungsform dadurch, dass der Abluftstrom 120 nach dem Durchtritt durch die Engstelle 140 nicht direkt zu den regenerierbaren Oberflächenfiltern 170 der Abtrennvorrichtungen 168 gelangen kann, sondern die Filterelemente 172 der Oberflächenfilter 170 durch eine Abdeckung 292 gegen einen direkten Zutritt des Abluftstroms 120 geschützt sind.

Bei dieser Ausführungsform muss der Abluftstrom 120 erst längs einer vertikalen Seitenwand 294 einer solchen Abdeckung 292 nach unten strömen, um anschließend in im wesentlichen horizontaler Richtung durch einen verengten Bereich 296 zwischen dem unteren Rand der Abdeckung 292 und dem oberen Rand der Precoat-Aufnahmebehälter 212 hindurch zu den Filterelementen 172 der regenerierbaren Oberflächenfilter 170 gelangen zu können.

An der den Filterelementen 172 zugewandten Innenseite des unteren Randes jedes Abdeckung 292 ist jeweils eine zusätzliche untere Precoat-Zuführeinrichtung 298 angeordnet, welche dazu dient, die Filterelemente 172 mit einer Schutzschicht aus dem Precoat-Material zu versehen.

Die in die Strömungsleitelemente 132 integrierten Precoat-Zuführeinrichtungen 144 dienen bei dieser Ausführungsform lediglich dazu, die seitlichen Begrenzungswände des unteren Abschnitts 138 der Strömungskammer 128 mit Precoat-Material zu beschichten, um diese Flächen vor dem Anhaften von Nasslack-Overspray aus dem Abluftstrom 120 zu schützen.

Eine horizontale Deckenwand 300 jeder Abdeckung 292 ist jeweils unterhalb des zugeordneten Strömungsleitelements 132 und des in der Offenstellung befindlichen Verschließelements 226 sowie oberhalb des jeweils zugeordneten Filterelements 172 angeordnet, um einen direkten Zutritt des Abluftstroms 120 von oben zu den Filterelemente 172 zu verhindern.

Der verengte Bereich 296 zwischen der Abdeckung 292 einerseits und den Mündungsöffnungen 214 der Precoat-Aufnahmebehälter 212 andererseits weist eine vertikale Ausdehnung im Bereich von ungefähr 150 mm bis ungefähr 200 mm auf.

Die mittlere Strömungsgeschwindigkeit des Ablüftstroms 120 durch den verengten Bereich 296 liegt im Bereich von bis zu ungefähr 10 m/s.

Durch diese hohe Strömungsgeschwindigkeit kann praktisch kein Precoat-Material entgegen der Hauptströmungsrichtung des Abluftstroms 120 aus dem Innenraum der Abdeckung 292 heraus nach oben gelangen. In dem von der Abdeckung 292 umschlossenen Innenraum kann daher in kurzen Zeitintervallen (etwa alle 5 Minuten) eine Abreinigung und Neuprecoatierung von Oberflächenfiltern 170 mittels der unteren Precoat-Zuführeinrichtungen 298 durchgeführt werden, ohne dass hierfür die Engstelle 140 mittels der Verschließeinrichtungen 224 geschlossen werden muss.

Wenn ein Oberflächenfiltermodul beispielsweise zehn Filterelemente umfasst und alle 5 Minuten eines der Filterelemente abgereinigt wird, wird also jedes Filterelement ungefähr alle 50 Minuten einmal abgereinigt.

Durch die Abdeckungen 292 sind die Filterelemente 172 bei dieser fünften Ausführungsform ferner besonders gut gegen ein Verkleben mit Nasslack-Overspray geschützt.

Bei dieser Ausführungsform werden die Abschnitte 140a, 140b der Engstelle 140 (synchron oder zeitversetzt) nur geschlossen, um im unteren Abschnitt 138 der Strömungskammer 128 Precoatierungsvorgänge der seitlichen Begrenzungswände des unteren Abschnitts 138 der Strömungskammer 128 mittels der oberen Precoat-Zuführeinrichtungen 144 und/oder durch Aufwirbelung von Precoat-Material aus den Precoat-Aufnahmebehältern 212 mittels der Druckluftlanzen 220 durchzuführen, ohne dass während dieser Vorgänge Precoat-Material aus dem unteren Abschnitt 138 der Strömungskammer 128 in den Applikationsbereich 108 oder Nasslack-Overspray aus dem Applikationsbereich 108 in den unteren Abschnitt 138 der Strömungskammer 128 gelangen kann.

Im übrigen stimmt die in den Fig. 14 bis 17 dargestellte fünfte Ausführungsform hinsichtlich Aufbau und Funktion mit der in den Fig. 1 bis 10 dargestellten ersten Ausführungsform überein, auf deren vorstehende Beschreibung insoweit Bezug genommen wird.

## Patentansprüche

1. Anlage zum Lackieren von Gegenständen, insbesondere von Fahrzeugkarosserien (102), umfassend mindestens eine Lackierkabine (110) und mindestens eine Vorrichtung zum Abtrennen von Nasslack-Overspray aus einem Overspray-Partikel enthaltenden Abluftstrom (120), wobei die Overspray-Partikel in einem Applikationsbereich (108) der Lackieranlage (100) in den Abluftstrom (120) gelangen,
wobei die Vorrichtung (126) mindestens eine Abtrennvorrichtung (168) zum Abtrennen des Oversprays aus zumindest einem Teil des Abluftstroms (120) umfasst,
**dadurch gekennzeichnet,**
**dass** die Vorrichtung (126) mindestens eine Verschließvorrichtung (224), mittels welcher der Strömungsweg des Abluftstroms (120) von dem Applikationsbereich (108) zu der Abtrennvorrichtung (168) zeitweise zumindest teilweise verschließbar ist, und
mindestens eine Precoat-Zuführeinrichtung (144, 298) umfasst, welche ein Precoat-Material stromabwärts von der Verschließvorrichtung (224) in den Abluftstrom (120) abgibt.

2. Anlage nach Anspruch 1, **dadurch gekennzeichnet, dass** die Verschließvorrichtung (224) mindestens ein Verschließelement (226) und eine Bewegungseinrichtung (258), mittels welcher das Verschließelement (226) in den Strömungsweg des Abluftstroms (120) hinein in eine Schließstellung und aus dem Strömungsweg des Abluftstroms (120) heraus in eine Offenstellung bewegbar ist, umfasst.

3. Anlage nach Anspruch 2, **dadurch gekennzeichnet, dass** das Verschließelement (226) im Wesentlichen luftundurchlässig ausgebildet ist.

4. Anlage nach Anspruch 3, **dadurch gekennzeichnet, dass** das Verschließelement (226) eine Blechplatte umfasst.

5. Anlage nach einem der Ansprüche 3 oder 4, **dadurch gekennzeichnet, dass** das Verschließelement (226) in eine Schließstellung bringbar ist, in der es höchstens ungefähr 80 % des von dem Abluftstrom bei in der Offenstellung befindlichem Verschließelement (226) durchströmten Querschnitts überdeckt.

6. Anlage nach Anspruch 2, **dadurch gekennzeichnet, dass** das Verschließelement (226) ein luftdurchlässiges Filterelement (230) umfasst.

7. Anlage nach Anspruch 6, **dadurch gekennzeichnet, dass** das Verschließelement (226) eine Tragstruktur (228) umfasst, an welcher das Filterelement (230) gehalten ist.

8. Anlage nach Anspruch 7, **dadurch gekennzeichnet, dass** das Filterelement (230) mittels einer Klemmeinrichtung (242) an der Tragstruktur (228) gehalten ist.

9. Anlage nach einem der Ansprüche 7 oder 8, **dadurch gekennzeichnet, dass** die Tragstruktur (228) wabenförmig angeordnete Luftdurchtrittsöffnungen (234) aufweist.

10. Anlage nach einem der Ansprüche 7 bis 9, **dadurch gekennzeichnet, dass** die Tragstruktur (228) aus einem metallischen Material gebildet ist.

11. Anlage nach einem der Ansprüche 2 bis 10, **dadurch gekennzeichnet, dass** die Bewegungseinrichtung (258) mindestens eine Führungsschiene (272) zum Führen des Verschließelements (226) umfasst.

12. Anlage nach einem der Ansprüche 2 bis 11, **dadurch gekennzeichnet, dass** die Bewegungseinrichtung (258) einen elektrischen, hydraulischen oder pneumatischen Antrieb (260) für das Verschließelement (226) umfasst.

13. Anlage nach einem der Ansprüche 2 bis 12, **dadurch gekennzeichnet, dass** die Bewegungseinrichtung (258) ein umlaufendes Förderelement, insbesondere eine Kette oder einen Zahnriemen (266), umfasst.

14. Anlage nach einem der Ansprüche 2 bis 13, **dadurch gekennzeichnet, dass** das in der Verschließstellung befindliche Verschließelement (226) durch eine Bedienperson begehbar ist.

15. Anlage nach Anspruch 14, **dadurch gekennzeichnet, dass** die zu lackierenden Gegenstände (102) mittels einer Fördervorrichtung (104) durch den Applikationsbereich (108) gefördert werden und dass der vertikale Abstand zwischen der Oberseite des in der Schließstellung befindlichen Verschließelements (226) und der Unterseite der zu lackierenden Gegenstände (102) höchstens ungefähr 2 m beträgt.

16. Anlage nach einem der Ansprüche 2 bis 15, **dadurch gekennzeichnet, dass** die Vorrichtung (126) ein Stützelement (142) umfasst, an welchem sich das Verschließelement (226) in der Schließstellung abstützt.

17. Anlage nach einem der Ansprüche 2 bis 16, **dadurch gekennzeichnet, dass** das Verschließelement (226) in der Offenstellung unterhalb eines Strömungsleitelements (132) der Vorrichtung (126) angeordnet ist.

18. Anlage nach einem der Ansprüche 1 bis 17, **dadurch gekennzeichnet, dass** die Abtrennvorrichtung (168) mindestens ein regenerierbares Oberflächenfilter (170) umfasst.

19. Anlage nach einem der Ansprüche 1 bis 18, **dadurch gekennzeichnet, dass** die Abgabe des Precoat-Materials in den Abluftstrom (120) dann erfolgt, wenn die Verschließvorrichtung (224) den Strömungsweg des Abluftstroms (120) zumindest teilweise verschließt.

20. Anlage nach einem der Ansprüche 1 bis 19, **dadurch gekennzeichnet, dass** der Strömungsweg des Abluftstroms (120) von der Verschließvorrichtung (224) zu der Abtrennvorrichtung (168) mindestens einen verengten Bereich (296) aufweist.

21. Anlage nach Anspruch 20, **dadurch gekennzeichnet, dass** die mittlere Strömungsrichtung des Abluftstroms (120) beim Passieren des verengten Bereichs (296) im Wesentlichen horizontal ausgerichtet ist.

22. Anlage nach einem der Ansprüche 20 oder 21, **dadurch gekennzeichnet, dass** die Vorrichtung (126) mindestens eine Precoat-Zuführeinrichtung (298) umfasst, welche ein Precoat-Material stromabwärts von dem verengten Bereich (296) in den Abluftstrom (120) abgibt.

23. Anlage nach einem der Ansprüche 1 bis 22, **dadurch gekennzeichnet, dass** die Vorrichtung (126) mindestens einen Aufnahmebehälter (212) für gebrauchtes Precoat-Material umfasst.

24. Anlage nach Anspruch 23, **dadurch gekennzeichnet, dass** der Aufnahmebehälter (212) unterhalb der Abtrennvorrichtung (168) und/oder unterhalb der Verschließvorrichtung (224) angeordnet ist.

25. Anlage nach einem der Ansprüche 23 oder 24, **dadurch gekennzeichnet, dass** der Aufnahmebehälter (212) über eine Precoat-Abführleitung (222) mit einem Precoat-Vorlagebehälter (148) verbunden ist.

26. Anlage nach einem der Ansprüche 1 bis 25, **dadurch gekennzeichnet, dass** mindestens ein Precoat-Vorlagebehälter (148) mit mindestens einer Precoat-Zuführeinrichtung (144, 298) verbunden ist, welche ein Precoat-Material in den Abluftstrom (120) abgibt.

27. Anlage nach einem der Ansprüche 23 bis 26, **dadurch gekennzeichnet, dass** die Vorrichtung (126) mindestens eine Druckluftdüse (220) umfasst, mittels welcher in dem Aufnahmebehälter (212) befindliches Precoat-Material aus dem Aufnahmebehälter (212) in den Strömungsweg des Abluftstroms (120) befördert werden kann.

28. Anlage nach einem der Ansprüche 1 bis 27, **dadurch gekennzeichnet, dass** die Vorrichtung (126) mindestens eine Luftschleiererzeugungsvorrichtung (200) zum Erzeugen eines Luftschleiers an einer den Strömungsweg des Abluftstroms (120) begrenzenden Wandfläche umfasst.

29. Anlage nach Anspruch 28, **dadurch gekennzeichnet, dass** dem Abluftstrom (120) über eine oder mehrere Luftschleiererzeugungsvorrichtungen (200) eine Luftmenge zugegeben wird, welche von ungefähr 10 % bis ungefähr 30 % der aus dem Applikationsbereich (108) stammenden Abluftmenge entspricht.

30. Anlage nach einem der Ansprüche 28 oder 29, **dadurch gekennzeichnet, dass** die über die Luftschleiererzeugungsvorrichtung (200) zugeführte Luft gekühlt ist.

31. Anlage nach einem der Ansprüche 28 bis 30, **dadurch gekennzeichnet, dass** über die Luftschleiererzeugungsvorrichtung (200) Frischluft zugeführt wird.

32. Anlage nach einem der Ansprüche 28 bis 30, **dadurch gekennzeichnet, dass** über die Luftschleiererzeugungsvorrichtung (200) gereinigte Abluft zugeführt wird.

33. Anlage nach einem der Ansprüche 28 bis 32, **dadurch gekennzeichnet, dass** die durch den Luftschleier geschützte Wandfläche im Wesentlichen horizontal ausgerichtet ist.

34. Anlage nach einem der Ansprüche 28 bis 33, **dadurch gekennzeichnet, dass** die durch den Luftschleier geschützte Wandfläche eine Strömungsleitfläche ist, welche eine Engstelle (140) im Strömungsweg des Abluftstroms (120) von dem Applikationsbereich (108) zu der Abtrennvorrichtung (168) seitlich begrenzt.

35. Anlage nach Anspruch 34, **dadurch gekennzeichnet, dass** die mittlere Strömungsrichtung des Luftschleiers zu der Engstelle (140) hin gerichtet ist.

36. Anlage nach einem der Ansprüche 34 oder 35, **dadurch gekennzeichnet, dass** die Engstelle (140) mittels der Verschließvorrichtung (224) zumindest teilweise verschließbar ist.

37. Anlage nach einem der Ansprüche 1 bis 36, **dadurch gekennzeichnet, dass** die Vorrichtung (126) einen Umluftkreislauf (118) aufweist, in welchem der Abluftstrom (120), aus dem der Nasslack-Overspray abgetrennt worden ist, zumindest teilweise erneut dem Applikationsbereich (108) zugeführt wird.

38. Verfahren zum Abtrennen von Nasslack-Overspray aus einem Overspray-Partikel enthaltenden Abluftstrom (120), wobei die Overspray-Partikel in einem Applikationsbereich (108) einer Lackieranlage (100) in den Abluftstrom (120) gelangen, umfassend folgende Verfahrensschritte:
- Abtrennen des Oversprays aus zumindest einem Teil des Abluftstroms (120) mittels einer Abtrennvorrichtung (168);
- zeitweises, zumindest teilweises Verschließen des Strömungswegs des Abluftstroms (120) von dem Applikationsbereich (108) zu der Abtrennvorrichtung (168) mittels mindestens einer Verschließvorrichtung (224); und
- Abgeben eines Precoat-Materials in den Abluftstrom (120) stromabwärts von der Verschließvorrichtung (224).

39. Verfahren nach Anspruch 38, **dadurch gekennzeichnet, dass** die Abtrennvorrichtung (168) mindestens ein regenerierbares Oberflächenfilter (170) umfasst und dass der Strömungsweg des Abluftstroms (120) von dem Applikationsbereich (108) zu der Abtrennvorrichtung (168) zumindest teilweise verschlossen wird, wenn das regenerierbare Oberflächenfilter (170) abgereinigt wird.

40. Verfahren nach einem der Ansprüche 38 oder 39, **dadurch gekennzeichnet, dass** ein Precoat-Material intervallweise stromabwärts von der Verschließvorrichtung (224) in den Abluftstrom (120) abgegeben wird und dass der Strömungsweg des Abluftstroms (120) von dem Applikationsbereich (108) zu der Abtrennvorrichtung (168) während der Abgabe des Precoat-Materials in den Abluftstrom (120) zumindest teilweise verschlossen wird.

## Claims

1. Installation for painting objects, in particular vehicle bodies (102), comprising at least one painting cabin (110) and at least one device for separating wet paint overspray from an exhaust air flow (120) containing overspray particles, wherein the overspray particles pass into the exhaust air flow (120) in an application region (108) of the painting installation (100),
wherein the device (126) comprises at least one separation device (168) for separating the overspray from at least a part of the exhaust air flow (120),
**characterised in that**
the device (126) comprises at least one closing device (224), by means of which the flow path of the exhaust air flow (120) from the application region (108) to the separation device (168) is intermittently closable at least partially, and
at least one precoat feeding means (144,298), which discharges a precoat material into the exhaust air flow (120) downstream of the closing device (224).

2. Installation according to claim 1, characterised the closing device (224) comprises at least one closing element (226) and a moving means (258), by means of which the closing element (226) is movable into the flow path of the exhaust air flow (120) into a closing position and out of the flow path of the exhaust air flow (120) into an open position.

3. Installation according to claim 2, **characterised in that** the closing element (226) is configured to be substantially airtight.

4. Installation according to claim 3, **characterised in that** the closing element (226) comprises a sheet metal plate.

5. Installation according to claim 3 or 4, **characterised in that** the closing element (226) is movable into a closing position, in which it covers approximately 80% at most of the cross-section flowed through by the exhaust air flow when the closing element (226) is located in the open position.

6. Installation according to claim 2, **characterised in that** the closing element (226) comprises an air-permeable filter element (230).

7. Installation according to claim 6, **characterised in that** the closing element (226) comprises a support structure (228), on which the filter element (230) is held.

8. Installation according to claim 7, **characterised in that** the filter element (230) is held on the support structure (228) by means of a clamping device (242).

9. Installation according to claim 7 or 8, **characterised in that** the support structure (228) has air passages (234) arranged in a honeycomb configuration.

10. Installation according to any of claims 7 to 9, **characterised in that** the support structure (228) is formed from a metal material.

11. Installation according to any of claims 2 to 10, **characterised in that** the moving means (258) comprises at least one guide rail (272) for guiding the closing element (226).

12. Installation according to any of claims 2 to 11, **characterised in that** the moving means (258) comprises an electric, hydraulic or pneumatic drive (260) for the closing element (226).

13. Installation according to any of claims 2 to 12, **characterised in that** the moving means (258) comprises a circulating transport element, in particular a chain or a toothed belt(266).

14. Installation according to any of claims 2 to 13, **characterised in that** the closing element (226) when in the closing position is accessible by an operator.

15. Installation according to claim 14, **characterised in that** the objects (102) to be painted are transported by means of a transport device (104) through the application region (108) and **in that** the vertical spacing between the upper side of the closing element (226) when in the closing position and the underside of the objects (102) to be painted amounts to approximately 2 m at most.

16. Installation according to any of claims 2 to 15, **characterised in that** the device (126) comprises a support element (142), against which the closing element (226) is supported in the closing position.

17. Installation according to any of claims 2 to 16, **characterised in that** in the open position the closing element (226) is arranged below a flow guide element (132) of the device (126).

18. Installation according to any of claims 1 to 17, **characterised in that** the separation device (168) comprises at least one regenerable surface filter (170).

19. Installation according to any of claims 1 to 18, **characterised in that** the discharge of the precoat material into the exhaust air flow (120) occurs when the closing device (224) at least partially closes off the flow path of the exhaust air flow (120).

20. Installation according to any of claims 1 to 19, **characterised in that** the flow path of the exhaust air flow (120) from the closing device (224) to the separation device (168) has at least one constricted region (296).

21. Installation according to claim 20, **characterised in that** the central flow direction of the exhaust air flow (120) is oriented substantially horizontally during passage through the constricted region (296).

22. Installation according to claim 20 or 21, **characterised in that** the device (126) comprises at least one precoat feeding means (298), which discharges a precoat material into the exhaust air flow (120) downstream of the constricted region (296).

23. Installation according to any of claims 1 to 22, **characterised in that** the device (126) comprises at least one receiving container (212) for used precoat material.

24. Installation according to claim 23, **characterised in that** the receiving container (212) is arranged below the separation device (168) and/or below the closing device (244).

25. Installation according to claim 23 or claim 24, **characterised in that** the receiving container (212) is connected to a precoat storage container (148) by means of a precoat discharge conduit (222).

26. Installation according to any of claims 1 to 25, **characterised in that** at least one precoat storage container (148) is connected to at least one precoat feeding means (144, 298), which discharges a precoat material into the exhaust air flow (120).

27. Installation according to any of claims 23 to 26, **characterised in that** the device (126) comprises at least one compressed air nozzle (220), by means of which precoat material located in the receiving container (212) can be transported out of the receiving container (212) into the flow path of the exhaust air flow (120).

28. Installation according to any of claims 1 to 27, **characterised in that** the device (126) comprises at least one air curtain producing device (200) for generating an air curtain on a wall surface delimiting the flow path of the exhaust air flow (120).

29. Installation according to claim 28, **characterised in that** an amount of air corresponding to approximately 10% to approximately 30% of the amount of exhaust air originating from the application region (108) is added to the exhaust air flow (120) by means of one or more air curtain producing devices (200).

30. Installation according to claim 28 or 29, **characterised in that** the air fed by means of the air curtain producing device (200) is cooled.

31. Installation according to any of claims 28 to 30, **characterised in that** fresh air is fed by means of the air curtain producing device (200).

32. Installation according to any of claims 28 to 30, **characterised in that** cleaned exhaust air is fed by means of the air curtain producing device (200).

33. Installation according to any of claims 28 to 32, **characterised in that** the wall surface protected by the air curtain is oriented substantially horizontally.

34. Installation according to any of claims 28 to 33, **characterised in that** the wall surface protected by the air curtain is a flow guide surface, which laterally delimits a constriction (140) in the flow path of the exhaust air flow (120) from the application region (108) to the separation device (168).

35. Installation according to claim 34, **characterised in that** the central flow direction of the air curtain is directed towards the constriction (140).

36. Installation according to claim 34 or 35, **characterised in that** the constriction (140) is at least partially closable by means of the closing device (224).

37. Installation according to any of claims 1 to 36, **characterised in that** the device (126) has a recirculating air circuit (118), in which the exhaust air flow (120), from which the wet paint overspray has been separated, is fed at least partially once again to the application region (180).

38. Process for separating wet paint overspray from an exhaust air flow (120) containing overspray particles, wherein the overspray particles pass into the exhaust air flow (120) in an application region (108) of a painting installation (100), comprising the following process steps:
• separating the overspray from at least a part of the exhaust air flow (120) by means of a separation device (168);
• intermittently at least partially closing off the flow path of the exhaust air flow (120) from the application region (108) to the separation device (168) by means of at least one closing device (224); and
• discharging a precoat material into the exhaust air flow (120) downstream of the closing device (224).

39. Process according to claim 38, **characterised in that** the separation device (168) comprises at least one regenerable surface filter (170), and **in that** the flow path of the exhaust air flow (120) from the application region (108) to the separation device (168) is at least partially closed off when the regenerable surface filter (170) is cleaned.

40. Process according to claim 38 or 39, **characterised in that** a precoat material is discharged at intervals into the exhaust air flow (120) downstream of the closing device (224), and **in that** the flow path of the exhaust air flow (120) from the application region (108) to the separation device (168) is closed off at least partially during the discharge of the precoat material into the exhaust air flow (120).

## Revendications

1. Dispositif pour peindre des objets, en particulier des carrosseries de véhicules (102), comportant au moins une cabine de peinture (110) et au moins un dispositif pour séparer des peintures humides en excès d'un flux d'air (120) contenant des particules pulvérisées en excès, dans lequel les particules pulvérisées en excès parviennent dans le flux d'air dans une zone d'application (108) du dispositif de peinture (100),
dans lequel le dispositif (126) comprend au moins un dispositif de séparation (168) pour séparer la peinture pulvérisée en excès d'au moins une partie du flux d'air (120),
**caractérisé en ce que**
le dispositif (126) comprend au moins un dispositif de fermeture (224), grâce auquel le trajet d'écoulement du flux d'air (120) de la zone d'application (108) vers le dispositif de séparation (168) peut être fermé temporairement au moins partiellement, et
comprend au moins un dispositif d'amenée de pré- revêtement (144, 298), qui émet un matériau de pré- revêtement dans le flux d'air (120) en aval du dispositif de fermeture (224).

2. Dispositif selon la revendication 1, **caractérisé en ce que** le dispositif de fermeture (224) comprend au moins un élément de fermeture (226) et un dispositif de déplacement (258), grâce auquel l'élément de fermeture (226) peut être déplacé dans le trajet d'écoulement du flux d'air (120) dans une position fermée et hors du trajet d'écoulement du flux d'air dans une position ouverte.

3. Dispositif selon la revendication 2, **caractérisé en ce que** l'élément de fermeture (226) est réalisé sensiblement de façon à laisser passer l'air.

4. Dispositif selon la revendication 3, **caractérisé en ce que** l'élément de fermeture (226) comporte une plaque de tôle.

5. Dispositif selon l'une des revendications 3 ou 4, **caractérisé en ce que** l'élément de fermeture (226) peut être amené dans une position fermée, dans laquelle il recouvre au maximum environ 80% de la section transversale traversée par le flux d'air dans le cas de l'élément de fermeture (226) se trouvant dans la position ouverte.

6. Dispositif selon la revendication 2, **caractérisé en ce que** l'élément de fermeture (226) comprend un élément de filtre laissant passer l'air (230).

7. Dispositif selon la revendication 6, **caractérisé en ce que** l'élément de fermeture (226) comporte une structure support (228) dans laquelle l'élément de filtre (230) est maintenu.

8. Dispositif selon la revendication 7, **caractérisé en ce que** l'élément de filtre (230) est maintenu dans la structure support (228) au moyen d'un dispositif de serrage (242).

9. Dispositif selon l'une des revendications 7 ou 8, **caractérisé en ce que** la structure support (228) comporte des ouvertures en nid d'abeilles laissant passer l'air (234).

10. Dispositif selon l'une des revendications 7 à 9, **caractérisé en ce que** la structure support (228) est réalisée en un matériau métallique.

11. Dispositif selon l'une des revendications 2 à 10, **caractérisé en ce que** le dispositif de déplacement (258) comporte au moins un rail de guidage (272) pour guider l'élément de fermeture (226).

12. Dispositif selon l'une des revendications 2 à 11, **caractérisé en ce que** le dispositif de déplacement (258) comprend un dispositif d'entraînement électrique, hydraulique ou pneumatique (260) pour l'élément de fermeture (226).

13. Dispositif selon l'une des revendications 2 à 12, **caractérisé en ce que** le dispositif de déplacement (258) comprend un élément de transport circulant tout autour, en particulier une chaîne ou une courroie dentée (266).

14. Dispositif selon l'une des revendications 2 à 13, **caractérisé en ce que** l'élément de fermeture (226) se trouvant dans la position fermée peut être manipulé par un opérateur.

15. Dispositif selon la revendication 14, **caractérisé en ce que** les objets à peindre (102) sont transportés au moyen d'un dispositif de transport (104) à travers la zone d'application (108) et **en ce que** la distance verticale entre le côté supérieur de l'élément de fermeture (226) se trouvant dans la position fermée et le côté inférieur des objets à peindre (102) est au maximum d'environ 2 m.

16. Dispositif selon l'une des revendications 2 à 15, **caractérisé en ce que** le dispositif (126) comprend un élément d'appui (142), sur lequel s'appuie l'élément de fermeture (226) dans la position fermée.

17. Dispositif selon l'une des revendications 2 à 16, **caractérisé en ce que** l'élément de fermeture (226) est disposé dans la position ouverte sous un élément de guidage de flux (132) du dispositif (126).

18. Dispositif selon l'une des revendications 1 à 17, **caractérisé en ce que** le dispositif de séparation (168) comprend au moins un filtre de surface (170) pouvant être régénéré.

19. Dispositif selon l'une des revendications 1 à 18, **caractérisé en ce que** l'émission du matériau de pré- revêtement dans le flux d'air (120) s'effectue donc, lorsque le dispositif de fermeture (224) ferme au moins partiellement le trajet d'écoulement du flux d'air (120).

20. Dispositif selon l'une des revendications 1 à 19, **caractérisé en ce que** le trajet d'écoulement du flux d'air (120) du dispositif de fermeture (224) au dispositif de séparation (168) présente au moins une zone rétrécie (296).

21. Dispositif selon la revendication 20, **caractérisé en ce que** la direction d'écoulement moyenne du flux d'air (120) est dirigée sensiblement horizontalement lors du passage de la zone rétrécie (296).

22. Dispositif selon l'une des revendications 20 ou 21, **caractérisé en ce que** le dispositif (126) comprend au moins un dispositif d'amenée de pré-revêtement (298), qui émet un matériau de pré-revêtement dans le flux d'air (120) en aval de la zone rétrécie (296).

23. Dispositif selon l'une des revendications 1 à 22, **caractérisé en ce que** le dispositif (126) comprend au moins un récipient de réception (212) pour le matériau de pré- revêtement utilisé.

24. Dispositif selon la revendication 23, **caractérisé en ce que** le récipient de réception (212) est disposé sous le dispositif de séparation (168) et/ou sous le dispositif de fermeture (224).

25. Dispositif selon l'une des revendications 23 ou 24, **caractérisé en ce que** le récipient de réception (212) est relié à un récipient collecteur de prérevêtement (148) par l'intermédiaire d'un conduit d'évacuation de prérevêtement (222).

26. Dispositif selon l'une des revendications 1 à 25, **caractérisé en ce qu'**au moins un récipient collecteur de prérevêtement (148) est relié à au moins un dispositif d'amenée de prérevêtement (144, 298), qui émet un matériau de prérevêtement dans le flux d'air (120).

27. Dispositif selon l'une des revendications 23 à 26, **caractérisé en ce que** le dispositif (126) comprend au moins une buse d'air comprimé (220), grâce à laquelle le matériau de prérevêtement se trouvant dans le récipient de réception (212) peut être transporté hors du récipient de réception (212) dans le trajet d'écoulement du flux d'air (120).

28. Dispositif selon l'une des revendications 1 à 27, **caractérisé en ce que** le dispositif (126) comprend au moins un dispositif de génération d'un rideau d'air (200) pour générer un rideau d'air sur une surface de paroi limitant le trajet d'écoulement du flux d'air (120).

29. Dispositif selon la revendication 28, **caractérisé en ce qu'**une quantité d'air, qui correspond d'environ 10% à environ 30% de la quantité d'air provenant de la zone d'application (108), est délivrée à l'écoulement d'air (120) par l'intermédiaire d'un ou de plusieurs dispositifs de génération de rideau d'air (200).

30. Dispositif selon l'une des revendications 28 ou 29, **caractérisé en ce que** l'air amené par le dispositif de génération de rideau d'air (200) est refroidi.

31. Dispositif selon l'une des revendications 28 à 30, **caractérisé en ce que** de l'air frais est amené par l'intermédiaire du dispositif de génération de rideau d'air (200).

32. Dispositif selon l'une des revendications 28 à 30, **caractérisé en ce que** de l'air purifié est amené par l'intermédiaire du dispositif de génération de rideau d'air (200).

33. Dispositif selon l'une des revendications 28 à 32, **caractérisé en ce que** la surface de paroi protégée par le rideau d'air est dirigée sensiblement horizontalement.

34. Dispositif selon l'une des revendications 28 à 33, **caractérisé en ce que** la surface de paroi protégée par le rideau d'air est une surface conductrice d'écoulement, qui limite latéralement un rétrécissement (140) dans le trajet d'écoulement du flux d'air (120) de la zone d'application (108) au dispositif de séparation (168).

35. Dispositif selon la revendication 34, **caractérisé en ce que** la direction d'écoulement moyenne du rideau d'air est dirigée vers le rétrécissement (140).

36. Dispositif selon l'une des revendications 34 ou 35, **caractérisé en ce que** le rétrécissement (140) peut être fermé au moins partiellement grâce au dispositif de fermeture (224).

37. Dispositif selon l'une des revendications 1 à 36, caractérisé en ce dispositif (126) comporte un circuit de circulation d'air (118), dans lequel l'écoulement d'air (120), à partir duquel la pulvérisation de peinture humide en excès est séparée, est de nouveau amené au moins partiellement dans la zone d'application (108).

38. Procédé pour séparer des peintures humides en excès d'un flux d'air (120) contenant des particules pulvérisées en excès, dans lequel les particules pulvérisées en excès parviennent dans le flux d'air dans une zone d'application (108) d'une installation de peinture (100), comportant les étapes de procédé suivantes :
- la séparation de la pulvérisation en excès d'au moins une partie du flux d'air (120) au moyen d'un dispositif de séparation (168) ;
- la fermeture temporaire au moins partielle du trajet d'écoulement du flux d'air (120) de la zone d'application (108) au dispositif de séparation (168) grâce à au moins un dispositif de fermeture (224) ; et
- l'émission d'un matériau de prérevêtement dans le flux d'air (120) en aval depuis le dispositif de fermeture (224).

39. Procédé selon la revendication 38, **caractérisé en ce que** le dispositif de séparation (168) comprend au moins un filtre de surface pouvant être régénéré (170) et **en ce que** le trajet d'écoulement du flux d'air (120) est fermé au moins partiellement de la zone d'application (108) au dispositif de séparation (168), lorsque le filtre de surface (170) pouvant être régénéré est nettoyé.

40. Procédé selon l'une des revendications 38 ou 39, **caractérisé en ce qu'**un matériau de prérevêtement est distribué par intervalles en aval depuis le dispositif de fermeture (224) dans le flux d'air (120) et **en ce que** le trajet d'écoulement du flux d'air (120) est fermé au moins partiellement de la zone d'application (108) au dispositif de séparation (168) pendant la distribution du matériau de prérevêtement dans le flux d'air (120).
